Europäisches Patentamt

European Patent Office

Office européen des brevets

(19)

(11) Veröffentlichungsnummer: **0 201 551**
**B1**

(12) EUROPÄISCHE PATENTSCHRIFT

(45) Veröffentlichungstag der Patentschrifft:
21.03.90

(51) Int. Cl.⁵: **G 03 B 23/02**

(21) Anmeldenummer: 85905627.7

(22) Anmeldetag: 12.11.85

(86) Internationale Anmeldenummer:
PCT/EP 85/00608

(87) Internationale Veröffentlichungsnummer:
WO 86/03022 (22.05.86 Gazette 86/11)

(54) VORRICHTUNG ZUM ZYKLISCHEN UMSCHICHTEN EINES STAPELS RECHTECKIGER ODER QUADRATISCHER BLÄTTER.

(30) Priorität: 13.11.84 DE 3441489

(43) Veröffentlichungstag der Anmeldung:
20.11.86 Patentblatt 86/47

(45) Bekanntmachung des Hinweises auf die Patenterteilung:
21.03.90 Patentblatt 90/12

(84) Bennante Vertragsstaaten:
AT BE CH DE FR GB IT LI NL SE

(56) Entgegenhaltungen:
FR-A-2 403 207
FR-A-2 403 585

(73) Patentinhaber: LicInvest AG
Hartbertstrasse 9
CH-7002 Chur (CH)

(72) Erfinder: ACKERET, Peter
Allmendstrasse 18
CH-8700 Küsnacht (CH)

(74) Vertreter: Röhl, Wolf Horst, Dipl.-Phys., Dr.
Dipl.-Ing. K. Sparing Dipl.-Phys. Dr. W.H. Röhl
Rethelstrasse 123
D-4000 Düsseldorf 1 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zum zyklischen Umschichten eines Stapels rechteckiger oder quadratischer Blätter oder einen sogenannten "Bildwechsler".

Bildwechsler sind aus den US-Patentschriften 4 238 898, 4 238 899, 4 241 528, 4 241 529, 4 245 417, 4 259 802 und 4 376 348 bekannt. Ihnen allen liegt das Prinzip zugrunde, daß ein Stapel von Bildern, wobei insbesondere an Fotoabzüge zu denken ist, von zwei relativ zueinander verschieblichen Rahmenteilen aufgenommen ist, von denen eines ein Betrachtungsfenster aufweisen kann. Jeweils bei einem vollständigen Bewegungszyklus der Rahmenteile – das heißt vollständig auseinanderziehen und wieder vollständig zusammenschieben – wird ein Bild an einem Stapelende abgenommen und am andern Stapelende wieder zugefügt. Hierfür weisen die Bildwechsler die folgenden Komponenten auf.

Eine Trenneinrichtung löst ein Einzelbild vom Stapel;

eine Zufuhreinrichtung führt der Trenneinrichtung Bilder zu;

eine Halteeinrichtung hält das vom Stapel abgetrennte Einzelbild in einem der Rahmenteile, während der Reststapel im andern Rahmenteil gehalten wird;

eine Leiteinrichtung führt das abgetrennte Einzelbild so, daß es auf die andere Seite des Reststapels gelangt.

Hier und im folgenden werden solche Vorrichtungen auch als "Blattwechsler" oder "Bildwechsler" bezeichnet, und ebenso werden die Begriffe "Blatt" und "Bild" synonym verwendet.

Die aus den vorgenannten Druckschriften bekannten Bildwechsler verwenden für die Zufuhreinrichtung und die Halteeinrichtung, die das Einzelblatt im ersten Rahmenteil sichert, ein- und dasselbe Element. Da aber die Funktionen dieser beiden Einrichtungen unterschiedlich sind, ist es günstiger, wenn man getrennte Elemente verwendet.

Aufgabe der vorliegenden Erfindung ist es, einen Bildwechsler mit einer den Funktionen der Einzelblatt-Halteeinrichtung besonders gut angepaßten Gestaltung zu schaffen.

Die erfindungsgemäße Lösung ergibt sich aus dem Patentanspruch 1.

Diese Lösung hat die folgenden Vorteile:

Die Trenneinrichtung umfaßt prinzipiell ein einen Durchlaß begrenzendes Element, relativ zu dem das Einzelblatt zusammen mit dem ersten Rahmenteil zu bewegen ist. Die Rollenanordnung, die auch am zweiten Rahmenteil angeordnet ist, kann dann mit diesem sogenannten "Separator" baulich vereinigt werden und benötigt deshalb nur wenig Platz. Die erfindungsgemäße Bauweise läßt die Notwendigkeit entfallen, irgendwelche Komponenten den Weg des Separators "kreuzen" lassen zu müssen, und die Halteinrichtung ist beispielsweise an den Kanten des Einzelblattes angreifenden Halteeinrichtungen anderer Bauart durch ihre größere Schonung der dünnen Fotoabzüge überlegen. Gleichwohl wird eine erhebliche Haltekraft aufgebracht, und zwar unabhängig davon, ob die Fotoabzüge durch Umgebungseinflüsse Verwerfungen oder Wölbungen aufweisen.

Ausführungsbeispiele des Gegenstandes der Erfindung werden nachstehend unter Bezugnahme auf die beigefügten Zeichnungen näher erläutert.

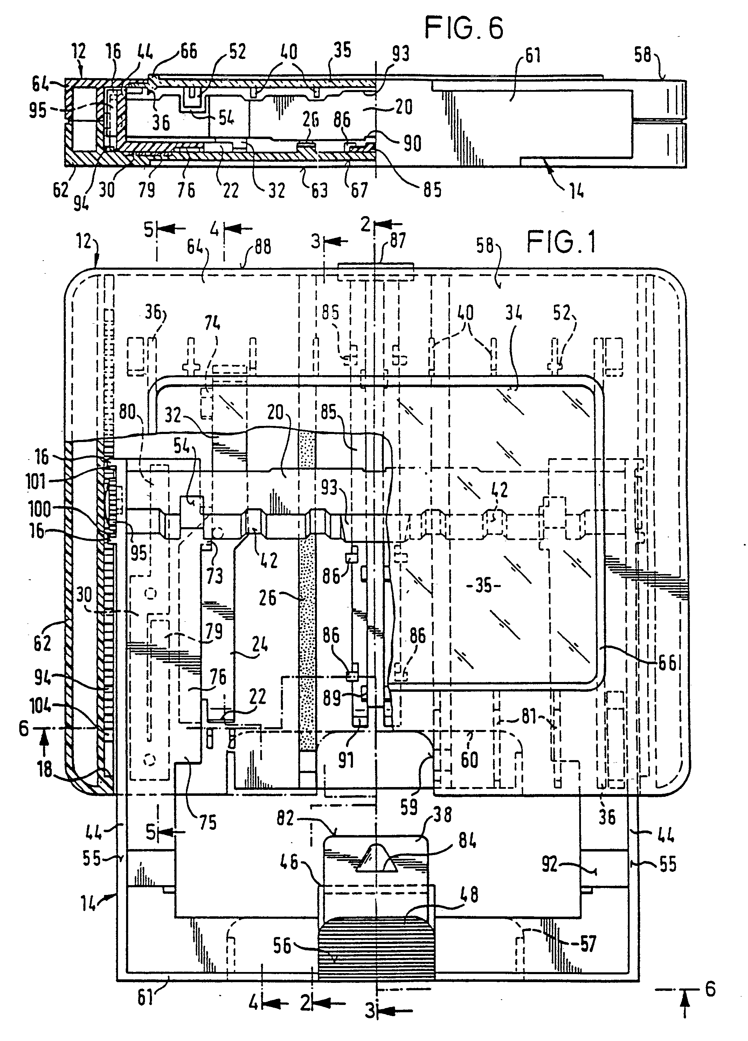

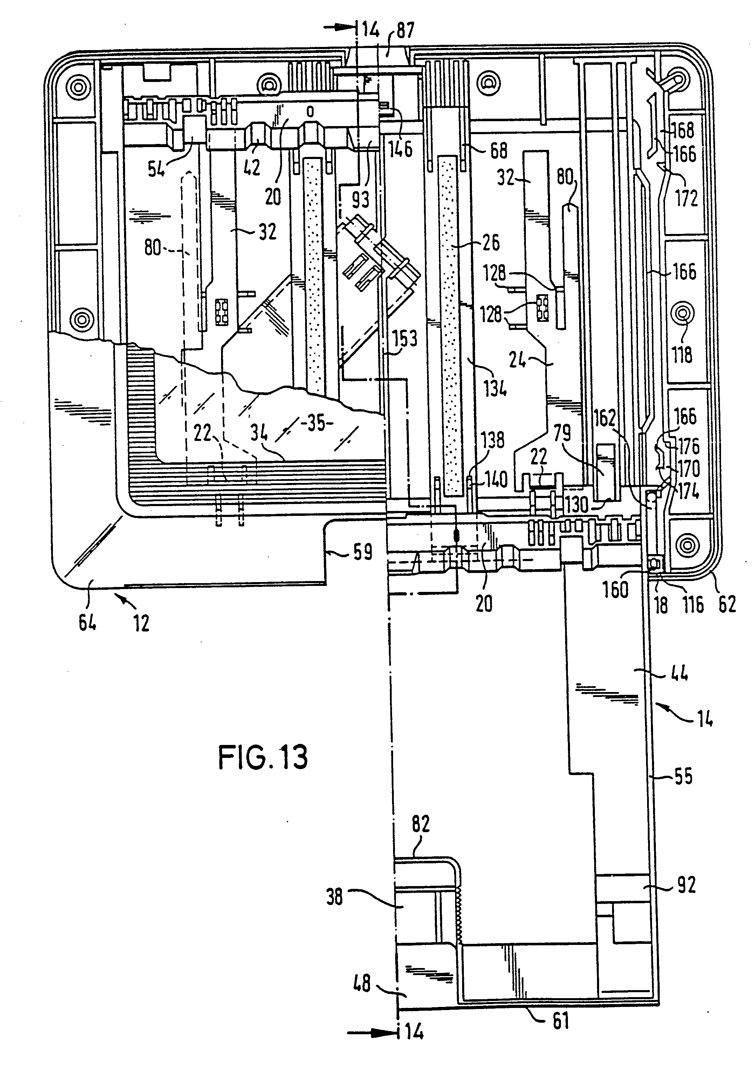

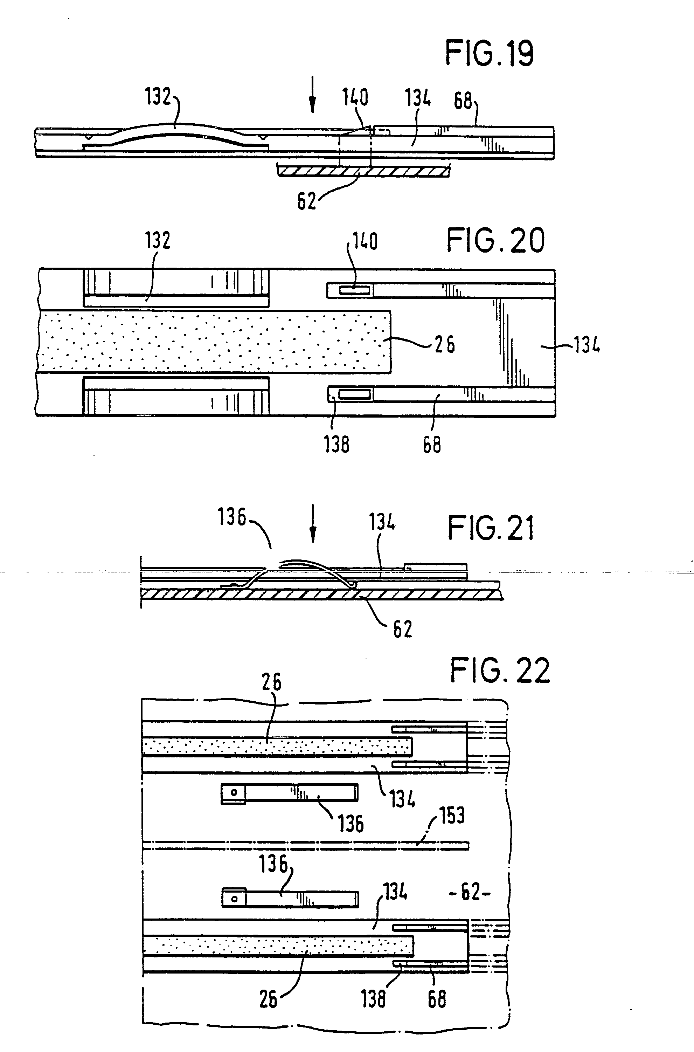

Die Figuren 1 bis 12 zeigen ein erstes, die Figuren 13 bis 34 ein zweites vollständiges Ausführungsbeispiel, die beide in allen Details erläutert werden.

Die dann folgenden Figuren sind zum großen Teil weitgehend schematisiert oder stellen nur Details dar: Der Fachmann kann dann auf die vollständig beschriebenen Ausführungsbeispiele für die übrigen Merkmale zurückgreifen, oder aber auch auf die eingangs genannten Druckschriften. Ebenso ergibt sich die Darstellungsart der Zeichnung – Längs- oder Querschnitt, Teilperspektive, Draufsicht etc. – für den Fachmann von selbst, oder die Darstellungsart ist bei der Beschreibung der Figuren jeweils angegeben.

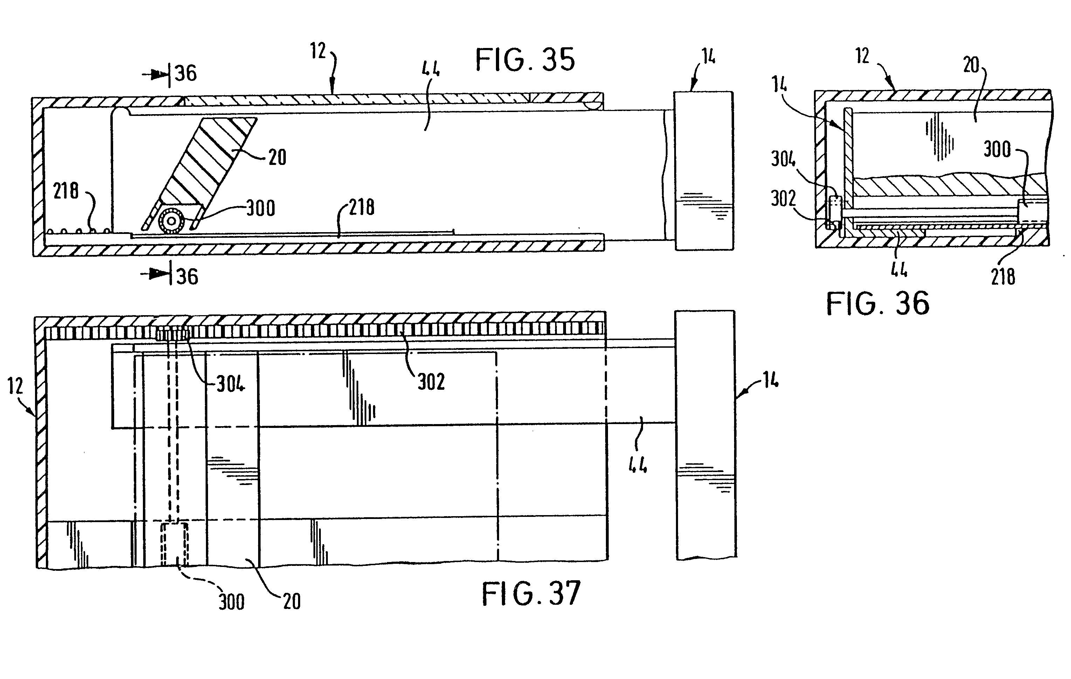

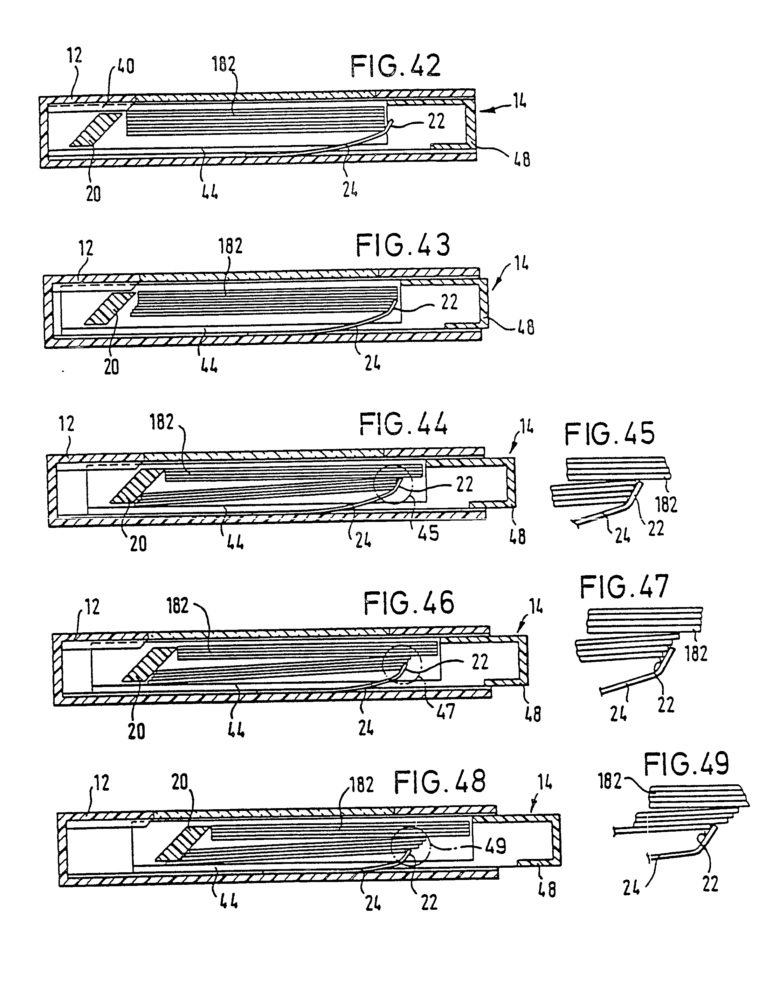

Die Figuren 35 bis 41 stellen verschiedene Gestaltungen des erfindungsgemäßen Konzepts der Halteeinrichtung dar. Die Figuren 42 bis 60 zeigen Zufuhreinrichtungen, die mit diesen Halteeinrichtungen kompatibel oder kombiniert sind.

Fig. 1 zeigt in teilweise geschnittener Draufsicht eine Vorrichtung gemäß der Erfindung. Das erste Rahmenteil ist als Gehäuse 12 ausgebildet, das zweite Rahmenteil ist ein Schieber 14, der aus dem Gehäuse um einen durch Anschläge 16 am Schieber und Gegenanschläge 18 am Gehäuse begrenzten Hub herausziehbar und wieder einschiebbar ist. Die Trenneinrichtung wird von einem Separatorsteg 20 gebildet. Die Zufuhreinrichtung wird von Haken 22 verkörpert, die am Blattfederarmen 24 sitzen. Die Halteeinrichtung zum Halten des Reststapels im Schieber wird ebenfalls von dem Separatorsteg gebildet, während das abgetrennte Einzelbild im Gehäuse durch das Zusammenwirken von im Gehäuse stationär angeordneten, mit einem Haftbelag 26 versehenen Schienen mit das Einzelbild gegen sie klemmenden, durch den Kontakt mit diesen zum Umlauf angetriebenen Rollen 28 gebildet wird. Schließlich wird die Leiteinrichtung durch Paare von Blattfedern 30 sowie mit den Federarmen 24 einstückig ausgebildete Federarme 32 verkörpert.

Die Federarme 24 und 32 drücken im eingeschobenen Zustand des Schiebers den Blattstapel (in Fig. 1 nicht gezeigt) gegen ein Sichtfenster, dessen innere Kontur mit 34 bezeichnet ist. Das dann im Stapel oberste Blatt, im Bestimmungsfalle ein Fotoabzug, soll dann möglichst plan liegen; zu diesem Zweck ist es an seinem Umfang in einer Ebene abgestützt, die definiert ist durch seitliche Rippen 36, die Unterseite eines Griffstück-Schiebeteils 38 und, auf der ihm gegenüberliegenden Seite, durch an das Gehäuse angeformte Rippen 40.

Fig. 1 zeigt die teilausgezogene Position des Schiebers 14. Im eingeschobenen Zustand liegt der Separatorsteg jenseits dieser Rippen 40; da er aber weiter zum Fenster 34 vorsteht, das dem Niveau dieser Rippen entspricht, weist er für den Vorbeigang derselben Einschnitte 42 auf.

Die Abstützung der Kanten des Stapels erfolgt seitlich (d.h. parallel zur Auszugsrichtung) durch Holme 44 des Schiebers. Frontseitig, das heißt auf der Seite des Schiebers, die beim Auszug am weitesten vom Gehäuse entfernt ist, wird die Abstützung der Kanten durch die Anschlagfläche 46 eines mittig angeordneten Griffstücks 48 sowie durch seitliche Anschlagflächen 50 am Schieber bewirkt. Am gegenüberliegenden Ende stützen sich die Kanten der Fotos an an dem Gehäuse angeformten Anschlägen 52 ab, für die der Separatorsteg ebenfalls Durchlaß-Ausnehmungen 54 aufweist, die jedoch wesentlich tiefer sind als die für die Rippen 40.

Die Rippe 36 reicht weiter in das Innere des Schiebers hinein, als dem Niveau entspricht, das von der Oberkante 55 der Schieberholme definiert ist, so daß die Fotos nicht seitlich nach außen über die Schieberholme gleiten können. Die entsprechende Wirkung tritt zwischen Separatorsteg einerseits, Rippen 40 andererseits ein.

Das Griffstück 48 hat eine auf der Fensterseite des Gehäuses liegende Oberplatte 56 und eine Unterplatte 57, die breiter ist als die Oberplatte, die das Fenster rahmenartig umgebende Deckwand 58 des Gehäuses weist im Bereich der Oberplatte einen Ausschnitt 59 auf, während die gegenüberliegende Gehäusewandung für die Unterplatte 57 komplementär bei 60 eingetieft ist. Demgemäß hat die Vorrichtung im geschlossenen Zustand eine in sich geschlossene, im wesentlichen rechteckige Kontur ohne vorstehende Teile.

Das Gehäuse und der Schieber sind Kunststoff-Spritzteile. Der Schieber ist ein einteiliges Element, bestehend aus Holmen, Separatorsteg, Griffstück und einer das Griffstück mit den Holmen – die L-förmigen Querschnitt besitzen – verbindenden Stirnwand 61.

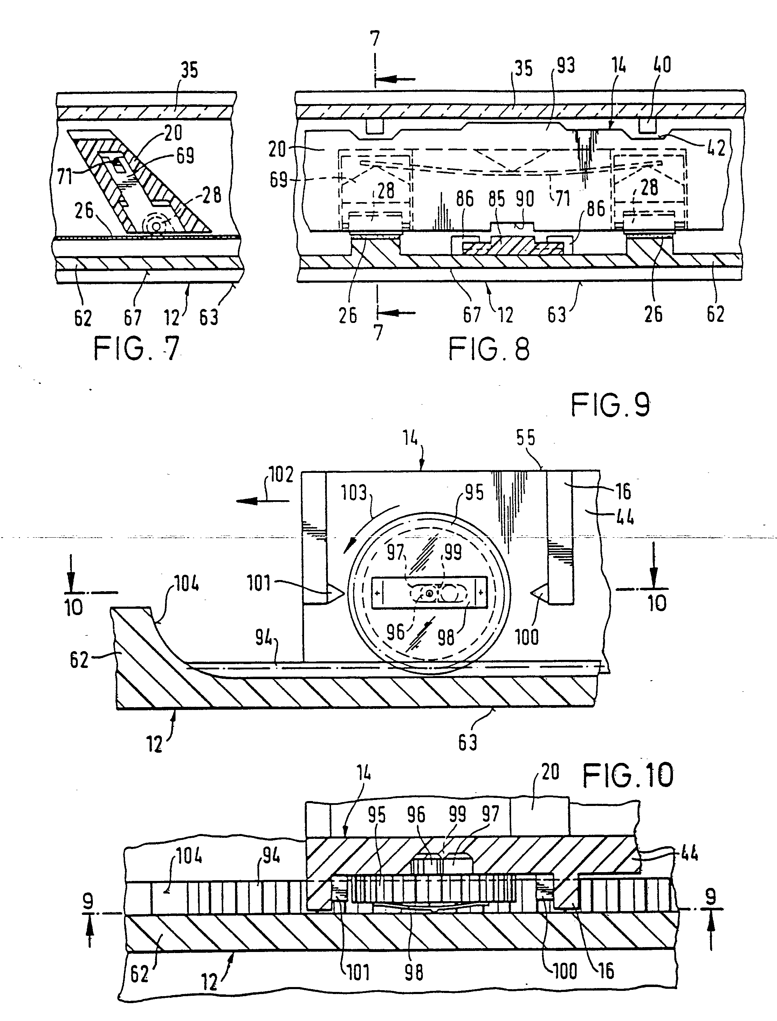

Das Gehäuse ist aus drei Teilen zusammengesetzt. Der Unterschale 62 mit Gehäuseboden 63, der rahmenartigen Oberschale 64 mit Fensterausschnitt, und dem in dieses eingesetzten Fenster 65. Das Gehäuse ist in Richtung der Schieberbewegung dadurch versteift, daß die Streben zwischen Deck- und Bodenwandung als Doppelträger ausgeführt sind, wie in Fig. 6 erkennbar. Die Gehäuseteile können miteinander verschweißt sein, oder man kann eine Schnappverbindung vorsehen.

Das Fenster weist rings um seine Hauptfläche einen schmalen, nach außen etwas vorstehenden Rand 66 auf, so daß es gegenüber dem ihn umgebenden Rahmen etwas vorsteht. Eine zur Kontur dieses Randes komplementäre Eintiefung ist auf der Außenseite der gegenüberliegenden Bodenwandung mit 67 bezeichnet und erlaubt das Übereinanderstapeln mehrerer Gehäuse.

Beim Herausziehen des Schiebers aus dem Gehäuse wird dieser mit einer Hand an Ober-und Unterplatte des Griffstücks erfaßt, während die andere Hand das Gehäuse hält. An den frontseitigen – also dem Separatorsteg abgewandten – Kanten der auf den Federarmenden liegenden Fotos greifen die Haken 22 an, wodurch eine gewisse Anzahl von Fotos – je nach der Höhe der Haken – der Trenneinrichtung zugeführt wird. Diese stellt sich letztlich als ein Durchlaßspalt dar, der einerseits von (im Ausführungsbeispiel) zwei an den Gehäuseboden innen angeformten Stufen 68, andererseits von der ihnen zugewandten Unterseite von Schuhen 69 begrenzt wird, die in den Separatorsteg eingesetzt sind und die in Fig. 7 im Schnitt und in Fig. 8 in Frontansicht erkennbar sind.

Zu jeder Stufe 68 gehört ein Schuh 69, und jedes System Stufe/Schuh ist beidseits der Symmetrieebene 70 der Vorrichtung angeordnet. Die Schuhe sind im Separatorsteg längsgeführt, mit einem Schneidenlager abgestützt und von einer eingelegten Drahtfeder 71 vorgespannt. In jedem Schuh ist außerdem ein Röllchen um eine zur Auszugsrichtung senkrechte Achse drehbar aufgenommen, und das Röllchen 28 ragt etwas aus dem Schuh heraus.

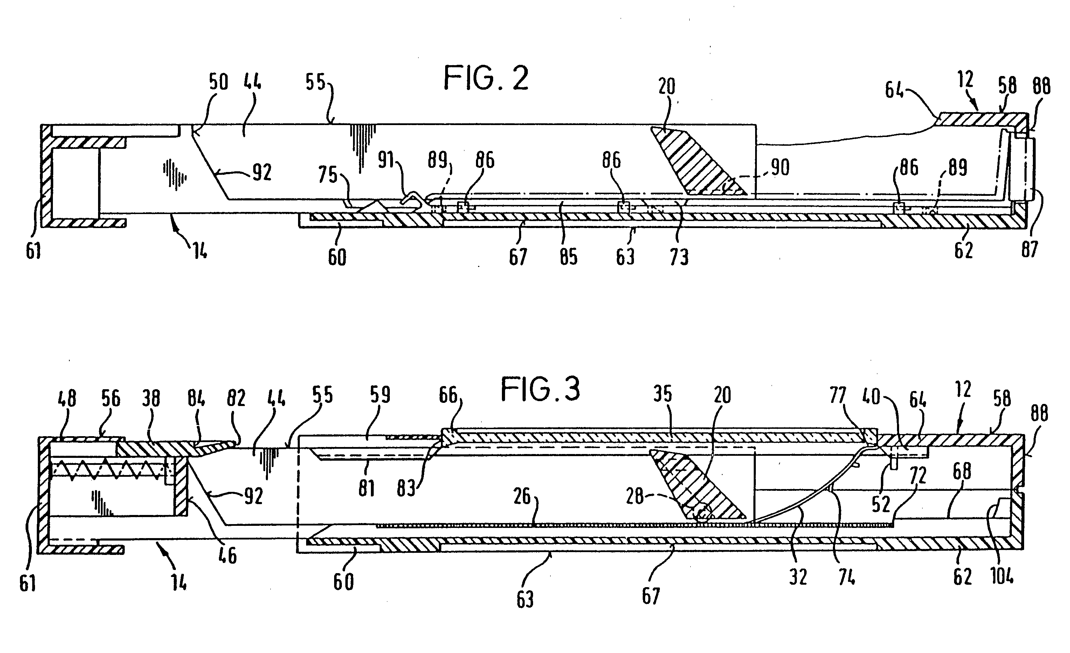

In Fig. 3 erkennt man die Lage der Stufen 68, die um reichlich die Dicke eines Fotoabzugs weiter über das Gehäusebodenniveau hinaussteht als die Oberfläche des Haftbelages 26. In der Ruhestellung des Schiebers liegt der unterste Abschnitt der Schuhe ein Stück weiter von der Kante 72 der Stufe entfernt, und die dem Stapel zugekehrte Fläche des Separatorstegs ist keilartig abgeschrägt derart, daß bei Auflaufen des Separators auf die Stapelkante die Fotos, an deren gegenüberliegender Kante die Haken 22 angreifen, längs der Schräge abwärts "wandern", in Richtung auf die ihnen zugekehrte Kante 72 der Stufen. Nur gerade die führende Kante eines einzigen Fotos hat zwischen den Schuhen 69 und den Haftbelag 26 soviel Platz, daß dieses im Stapel unterste Foto in den sich bildenden Spalt zwischen Schuhen 69 und Haftbelägen 26 eintreten kann, solange dieser Spalt von der Stufe 68 offengehalten wird. Alle anderen, vom Haken 22 mitgeführten Fotos stoßen an den Separator selbst oder an dessen Schuhe an mit der Folge, daß die Haken von deren Endkante abrutschen.

Wenn die in Auszugsrichtung hinteren Kanten der Schuhe 69 die Kante 72 der Stufen 68 passiert haben, senken sich die Schuhe unter der Wirkung der Drahtfeder 71, wobei die Rollen 28 sich auf das so abgetrennte einzelne Foto setzen und dieses auf die zugeordneten Haftbeläge pressen, wodurch es im Gehäuse – also dem ersten Rahmenteil – festgehalten wird. Der Reststapel wird vom Separator zusammen mit dem Schieber nach außen mitgenommen, bis dieser ganz ausgezogen ist.

Dabei ist zu beachten, daß die Federarme 32 ja auch vom Separatorsteg überlaufen werden. Damit sie während des Durchlaufs ihrer am Stapel angreifenden Enden nicht das abgetrennte Bild von unten belasten, werden sie während einer bestimmten Phase des Auszugshubes mechanisch in Richtung Gehäuseboden gedrückt. Hierzu dienen an die Schieberholme 44 angeformte Kufen 73, die seitlich von den Federarmen auskragende Ansätze 74 überstreichen und die Arme entsprechend ihrer Länge auf einem Teilhub halten. Weitere Kufen 75 an den Schieberholmen laufen auf die Federarme 24 an der Verbreiterung 76 auf, sobald das Einzelfoto zwischen Haftbelag und Rollen sicher geklemmt ist, und drücken diese Arme ebenfalls vom Sichtfenster weg, so daß man ungehindert weitere Fotos einfüllen, andere entnehmen kann.

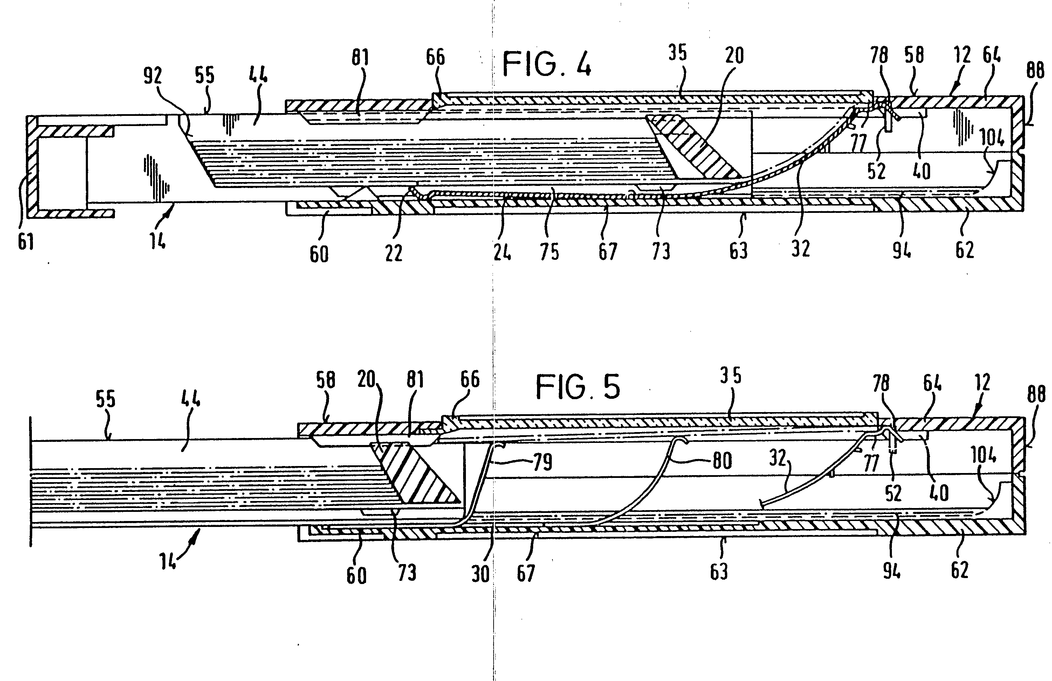

Auf der dem Stapel abgewandten Seite des Separators werden die Federarme 32 nach kurzem Hub wieder freigegeben, so daß sie wieder unter das vereinzelte Foto greifen und dessen hintere Kante allmählich in Richtung Fenster führen. Schließlich legt sich diese Kante unter der Wirkung der Federn an die Gehäuseoberseite an. Da die freien Enden der Federarme abgerundet sind, andererseits aber diese Kante sicher an der erreichten Position festgeklemmt werden soll, ist an den Federarmen noch ein kurzes Stück geradlinig ausgebildet, in fig. 4 mit 77 bezeichnet. Das abgerundete Federarmende findet dabei Platz in einer Ausnehmung auf der Innenseite der Gehäusedeckwand, in Fig. 5 mit 78 bezeichnet.

Die beiden Haken 22, die beiden Schuhe 69, die Haftbeläge 26 und die Federarme 32 sind sämtlich jeweils symmetrisch bezüglich der Mittelebene der Gesamtvorrichtung angeordnet, und die beiden Haken 22 liegen so genau wie möglich auf einer zu dieser Symmetrieebene senkrechten Linie. Das hat zur Folge, daß das zu wechselnde Foto auch dann ohne Verdrehung den Wechselvorgang durchläuft, wenn es wegen Untermaß nicht an den Schieberholmen geführt ist. Die Abmessungstoleranzen von Fotos sind nämlich bei gleicher Nenngröße unterschiedlich in Quer- und Längsrichtung. Da in den Entwicklungsanstalten die Papiere von Rollen recht genau eingehaltener Breite verarbeitet werden, die dann auf unterschiedliche Länge geschnitten werden, ist es bevorzugt, in Richtung der Schieberbewegung das Fotomaß vorzusehen, das enger toleriert ist.

Das abgetrennte Einzelbild, das bis jetzt nur an seiner einen Kante eingeklemmt gehalten beschrieben worden ist, wird als ganzes in Richtung Fenster gehoben. Hierzu dienen die schon erwähnten Blattfedern 30 mit frontseitigen Armen 79 und rückseitigen Armen 80, die – wie in Fig. 5 deutlich erkennbar – das Einzelfoto so halten und abstützen, daß es beim Schieberrückhub wieder auf den Stapel gelangen kann. Im geschlossenen Zustand der Vorrichtung und während des Auszugshubes des Schiebers – zumindest während des ersten Teils desselben – sind die Federarme 79, 80 von den Holmen des Schiebers in entsprechende Nuten des Gehäusebodens gedrückt, die in Fig. 6 erkennbar sind.

Zu Beginn des Rückhubs des Schiebers ist das Einzelfoto von den Federarmen 32 vor den an das Gehäuse angeformten Anschlägen 52 eingeklemmt und wird in Richtung Separatorsteg an vier Stellen von den Federarmen 79, 80 abgestützt. Die dem Separatorsteg zugekehrte andere Querkante des Fotos kann nach unten durchhängen, die ihr zugekehrte Seite des Separators ist jedoch keilförmig abgeschrägt, so daß die Kante allmählich gehoben wird, wenn der Separatorsteg auf sie zuläuft. Zwischen der Oberkante des Separatorstegs und der Gehäusedeckwand ist ein Spalt, der für den Durchlaß des Fotos reichlich bemessen ist. Der Gefahr, daß das Foto auf die ihm zugekehrt liegenden Kanten des vom Schieber mitgeführten Reststapels aufstößt, wird dadurch begegnet, daß die Gehäusedeckwand innen Niederhaltenocken 81 aufweist, die den Stapel unter dem Niveau der Separatoroberseite halten. Diese Niederhaltenocken stehen ausgefluchtet mit den Rippen 40, so daß sie durch die entsprechenden Ausschnitte 42, 54 des Separatorsteges passen.

Das Griffstück-Schiebeteil 38 ist gleitbeweglich im Griffstück aufgenommen und steht unter Federvorspannung in Richtung Gehäuse, wie in Fig. 3 gut erkennbar. Beim Einschub des Schiebers trifft seine freie Kante 82 auf einen im Gehäuse vorgesehenen Anschlag 83, wodurch er in das Griffstück zurückgedrückt wird und nicht in den durch das Gehäusefenster sichtbaren Raum ragt. Nach dem Herausziehen hingegen sichert er die im Schieber liegenden Fotos gegen Herausfallen. Zum Wechseln der Fotos kann er von Hand zurückgedrückt werden, was durch Fingerkante 84 erleichtert wird. Man kann die Fotos von der Unterseite des Schiebers her, zwischen die Holme greifend, herausdrücken oder neben dem Griffstück von oben hineinfassen.

Bei dem insoweit beschriebenen Vorgang bleibt immer das abgetrennte Foto im Gehäuse zurück. Es ist nicht oder nicht ohne weiteres möglich, dieses aus der Vorrichtung zu entnehmen. Um den Stapel, auch wenn dieser nur aus einem Bild besteht, entnehmen zu können, ist daher eine besondere Einrichtung vorgesehen.

Im Gehäuse ist eine Steuerbrücke 85 verschieblich aufgenommen, gehalten von an das Gehäuse angeformten Klammern 86. Die Brücke trägt einen Steuerknopf 87, der die Rückwand 88 des Gehäues durchsetzt und geringfügig über die Wechslerkontur vorsteht. Bei Fingerdruck auf den Knopf läuft die Brücke auf Keile 89 am Gehäuseboden auf und wird dadurch in Richtung Fenster gehoben. Die Breite der Brücke paßt gerade in einen entsprechenden Ausschnitt 90 im Separator und versperrt, auf dem gesamten Auszugshub des Schiebers, den Durchlaßspalt der Trenneinrichtung, so daß jedes in der Vorrichtung befindliche Bild mit dem Schieber heraustransportiert werden muß. Nahe der äußeren Endstellung des Schiebers überläuft dessen Separatorsteg eine hochstehende Nase 91 der Brücke, die nach unten ausfedert, wird der Schieber jetzt wieder eingeschoben, drückt der Separatorsteg zuerst die Brücke in ihre Ausgangsstellung zurück, ehe er unter erneuter Auslenkung der Nase 91 frei zurückführbar ist.

Wie oben erwähnt, sollen die Fotos durch die geschilderten Mittel im Abstand von der Fensterscheibe gehalten werden, damit diese bei den Wechselvorgängen nicht in Berührung mit der Bildoberfläche gelangt, wodurch Kratzschäden auftreten würden. Die Gefahr besteht jedoch gleichwohl, weil die Fotos nicht (immer) eben sind, sondern in aller Regel eine Wölbung entweder in Längs- oder in Querrichtung aufweisen. Bei Wölbung in Längsrichtung genügen die auf dem gesamten Auszugshub wirksamen Rippen 36. Im anderen Falle hingegen ist zwar das Griffstück-Schiebeteil wirksam, doch der gegenüberliegende Abschnitt des Separatorsteges wäre kaum in der Lage, die erheblichen Spannungen aufzunehmen, die in einem dickeren Stapel gleichartig gewölbter Fotos entstehen.

Deshalb sind zusätzlich folgende Maßnahmen getroffen:

Unterhalb der Anschlagflächen 50 weist die Schieberfrontwand nahe den Holmen Schrägflächen 92 auf, die im wesentlichen parallel der gegenüberliegenden Separatorschräge sind. Die Fotos liegen also schräg gestaffelt zwischen Separator und Schrägflächen, wodurch ein Großteil der Spannungen im Stapel auf die Gesamtfläche des Separators verteilt wird. Außerdem ist in der Mitte des Separatorsteges eine Erhöhung 93 vorgesehen, die die Restspannung derjenigen Fotos aufnimmt, die an den zu ihrer Kante senkrechten Anschlagflächen 50 abgestützt sind.

Wenn der Benutzer einmal begonnen hat, die Wechselbewegung durchzuführen, so muß diese ganz zuende gebracht werden, um die Vorrichtung in die Ausgangsposition zu bringen. Man kann also nicht den Schieber halb herausziehen und dann wieder einstoßen.

Dies wird durch einen Mechanismus bewirkt, der in den Figuren 9 und 10 im Detail dargestellt ist. An das Gehäuse ist eine Zahnstange 94 angespritzt, mit der ein Zahnrad 95 kämmt, welches einstückig mit seiner Welle 96 ausgebildet ist. Die Welle sitzt in einem zur Zahnstange parallelen Langloch 97 im Schieberholm 44, in das es mittels eines sich am Gehäuse abstützenden Blattfederchens 98, angespritzt am Zahnrad, eingedrückt gehalten wird.

Das Langloch ist durch eine Rippe 99 in zwei Teile unterteilt, in denen die Welle 96 nur noch wenig seitliches Spiel hat. Schließlich sind beidseits des Langlochs an den Schieber Sperrnasen 100, 101 angeformt, die in der Ebene des Zahnkranzes des Zahnrads liegen und mit ihren Spitzen in diesen eingreifen können.

Dieser Mechanismus arbeitet wie folgt:

Es sei angenommen, daß das Zahnrad die in Fig. 9 dargestellte Position hat und daß bei der Schieberbewegung in Richtung des Pfeils 102 das Zahnrad sich in Richtung des Pfeiles 103 dreht. Durch die Reibung des Federchens 98 an der Gehäusewandung wird dabei das Zahnrad nahe der Mitte des Langlochs, mit seiner Welle anliegend an der Rippe 99, gehalten. Dabei ergibt sich ein, wenn auch geringer, Abstand zwischen dem Kopfkreis des Zahnkranzes und der Spitze der Nase 101. Versucht man nun, den Schieber in Gegenrichtung zu bewegen, wird das Zahnrad an das äußere Ende des Langlochs verlagert und sofort von Spitze 101 gesperrt. Am Ende des Schieberhubs hingegen läuft der Zahnkranz auf einen Anschlag-Teilkreis 104 auf und wird unter Deformation des Federchens 98 über die Rippe 99 gehoben, wodurch nun nur die Drehung in der entgegengesetzten Richtung freigegeben ist.

Es ist wichtig anzumerken, daß zwar auf dem größten Teil des Schieberauszugshubes die Halteeinrichtung von den Rollen 28 im Zusammenwirken mit den Haftbelägen 26 verkörpert wird, daß aber auf dem letzten Teil des Hubes, kurz vor Erreichen der Endposition, auch die Federarme 32, indem sie das Einzelfoto festklammern, als "Fortsetzung" der Halteeinrichtung wirken.

Wie aus der vorhergehenden Erläuterung entnehmbar ist, wird jedes umgeschichtete Blatt während des gesamten Umschichtzyklus niemals freigegeben, sondern an mindestens zwei Punkten erfaßt und damit gegen Verdrehung gesichert. Es ist somit stets unter Kontrolle, hier mit achssymmetrischen Mitteln.

Die stapelparallelen Schenkel der Schieberholme, auf denen sich beim Umschichten das vereinzelte Blatt abstützt, dürfen voneinander höchstens einen solchen Abstand haben, daß ein kurzes Foto, das mit einer Kante gerade an einem dazu senkrechten Holmschenkel anliegt, von dem gegenüberliegenden Holm an der anderen Kante noch gehalten wird.

Wie oben erwähnt, hat die Vorrichtung das Sichtfenster in der Oberschale des Gehäuses. Die Abmessung des Fensters ist dann in Richtung quer zur Bewegungsrichtung höchstens so groß, daß das kürzestmögliche Foto, auch wenn es außermittig liegt, sich nicht mit seiner Kante im Sichtfeld präsentiert. Entsprechendes gilt für die Rippen 36, und ganz dieselben Überlegungen treffen auch zu auf die Federarme 79 und 80 und überhaupt für alle an den Blattflächen angreifenden Bauteile.

Die oben beschriebene und dargestellte Ausbildung des Federsystems, gebildet von den einstückig geschnittenen und paarweise symmetrisch angeordneten Federn mit den Federarmen 24 und 32, erfüllt insgesamt fünf Funktionen. Erstens bilden die an ihnen angeformten Haken 22 die Zufuhreinrichtung, wobei die Haken letztlich nur ein Blatt in die Trenneinrichtung mitnehmen. Zweitens bilden beide Arme gemeinsam – genauer gesagt, die vier Arme beider Federn – ein Andrucksystem, mit dem der Stapel bei ruhender Vorrichtung sauber gegen das Fenster gedrückt wird. Drittens dient der Arm 32 dazu, nachdem er vom Separator überlaufen worden ist, das Einzelblatt an die Gehäusedeckwand zu fördern und es dort, viertens, festzuklemmen. Fünftens schließlich sind die Arme 32 dicht genug geben den Haftbelägen 26 angeordnet, daß sie ein gegebenenfalls infolge statischer Aufladung am Haftbelag anhaftendes Einzelblatt infolge ihrer Vorspannkraft von diesem abschälen können. Anzumerken ist, daß der Arm 32 so geformt und angeordnet ist, daß er vom Separatorsteg überlaufen werden kann, ohne daß es zu einer Störung der glatten Handhabung führt.

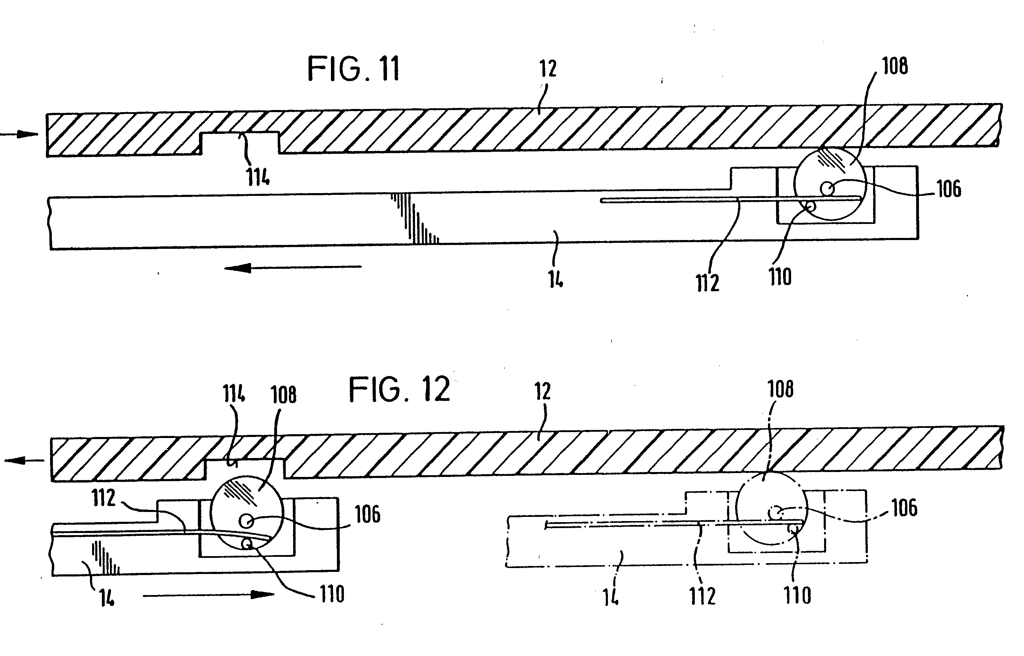

Die Fig. 11 und 12 zeigen eine Variante der Sperreinrichtung nach Fig. 9 und 10. Von den Rahmenteilen sind jeweils nur einander gegenüberstehende Abschnitte 12 bzw. 14 angedeutet. In einem der Rahmenteile, hier Rahmenteil 14, ist um einen Zapfen 106, der jedoch exzentrisch sitzt, eine Klemmrolle 108 drehbar. Sie trägt gegenüber ihrer größten Ausladung einen Stift 110, über den eine am Rahmenteil 14 befestigte Blattfeder 112 greift. Bei Bewegung in Pfeilrichtung in Fig. 11 kann die Klemmrolle ausweichen, in Gegenrichtung jedoch verklemmt sie die beiden Rahmenteile. In den Endlagen der Rahmenteile trifft die Klemmrolle auf eine Ausnehmung 114 im jeweils anderen Rahmenteil und kann deshalb, bei Schubrichtungsumkehr, frei um etwa 90° schwenken, bis der Stift 110 wieder an der Feder 112 anliegt.

Die oben beschriebenen beiden Sperrvorrichtungen wirken nach Art eines Freilaufs, das heißt, sie schalten jeweils erst in den Endstellungen beider Rahmenteile relativ zueinander um. Es kann aber vorkommen, daß ein Benutzer eine Fehlbedienung wieder rückgängig machen möchte, etwa weil ein Stapel Fotoabzüge beim Einlegen sich verlagert hat. Dann ist es doch erwünscht, wenigstens aus gewissen Positionen heraus ungesperrt in beiden Richtungen die Rahmeiteile relativ zueinander verlagern zu können. Deshalb ist im nachstehend beschriebenen bevorzugten Ausführungsbeispiel eine andere Bauart der Sperrvorrichtung vorgesehen.

In Fig. 13 bis 15 ist die Ausführungsform in ihrer Gesamtheit dargestellt. Im Gehäuse 12 ist der Schieber 14 verschieblich aufgenommen; Gehäuse 12 bildet das erste Rahmenteil, Schieber 14 das zweite. Der Auszugshub ist durch ein an einen der Schieberholme 44 angeformtes Lagerauge 116, das auf einen gehäuseseitigen Anschlag 18 aufläuft, begrenzt. Das Gehäuse ist aus einer Oberschale 64 und einer Unterschale 62, deren Außenränder formschlüssig ineinandergreifen, zusammengeschraubt, und zwar in dem Bereich zwischen den Schieberholmen 44 und den zu ihnen parallelen Außenkanten des Gehäuses. Hierfür weist jeweils die Unterschale angeformte Führungshülsen 118 für Schraubenschäfte 120 sowie außenseitige Einsenkungen 122 für Schraubenköpfe 124 auf, während die Oberschale dazu koaxial angeformte Kernloch-Hülsen 126 trägt, in die die Schrauben ihr Gewinde selbst schneiden. In die Oberschale 64 ist das Fenster 35 eingeklipst, und die unter seinen äußeren Randbereichen liegenden Teile der Oberschale sind dadurch nicht sichtbar, daß diese Bereiche des Fensters mattiert sind. In Fig. 13 ist die Kontur des mittleren, transparenten Fensterabschnitts mit 34 markiert.

Funktionell bestehen wenig Unterschiede gegenüber dem Ausführungsbeispiel nach Fig. 1 bis 10, so daß es genügt, nur die markanten Abweichungen zu erläutern.

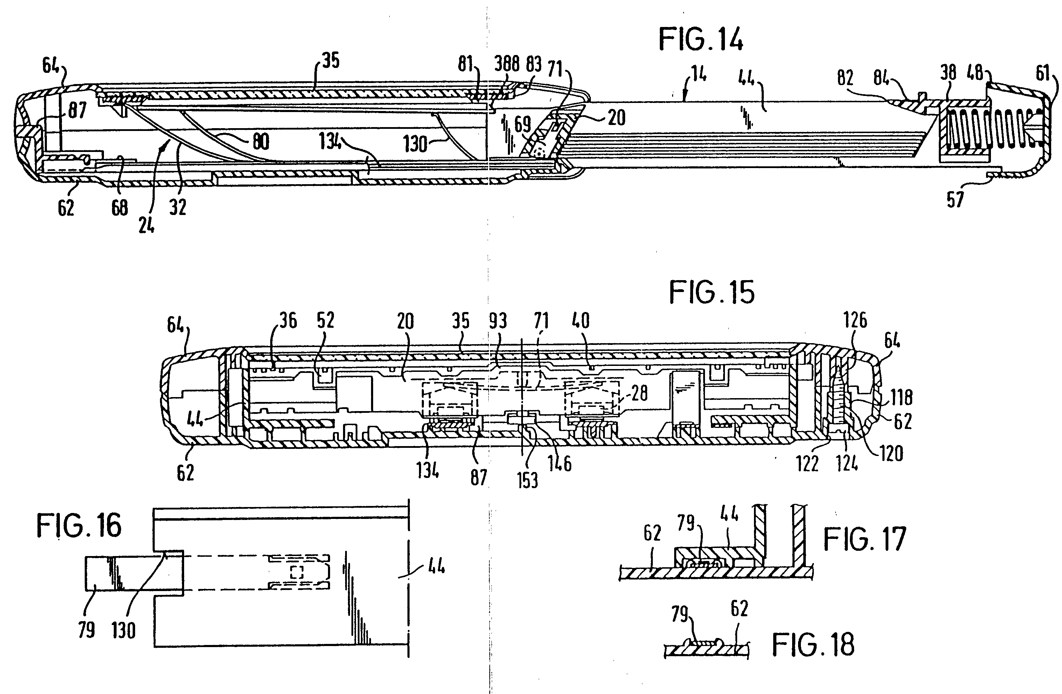

Hier sind die Federarme 24, 32 und 80 zu einem Stanz- und Biegeteil zusammengefaßt und mittels Nocken 128 positioniert und kalt festgebördelt. Dagegen sind die Federarme 79 gesonderte Bauteile, die wie in Fig. 16 bis 18 dargestellt mittels angeformter Nocken an der Unterschale positioniert und kalt festgebördelt werden. Damit dieser Federarm das vereinzelte Bild möglichst frühzeitig hochheben kann, weist der zugehörige Schieberholm 44 Ausschnitte 130 auf. Das sichere Festhalten des vereinzelten Bildes ist während dieser Phase des Wechselzyklus durch die Federarme 80 gewährleistet, die die dem Schieber abgewandte Endkante des Bildes klammerartig nach oben drücken.

Der Haftbelag 26 kann unter Umständen das vereinzelte Bild so sehr festhalten, daß die Kraft der Federarme 79 nicht ausreicht, um die dem Schieber zugewandte Bildkante zu heben. Die Fig. 19 und 20 zeigen eine erste Möglichkeit, diese Kante zusätzlich vom Haftbelag abzudrücken. Die beiden Haftbelagstreifen sind auf je einem gesondert gefertigten Steg 134 angeordnet. Beidseits des Streifens 26 weist der Steg angeformte Federbrücken 132 auf, die nach Überlaufen durch den Separatorsteg 20 nach oben ausfedern und die Bildkante liften. Alternativ kann man – wie in Fig. 21 und 22 gezeigt – gesonderte metallische Federblätter 136 vorsehen.

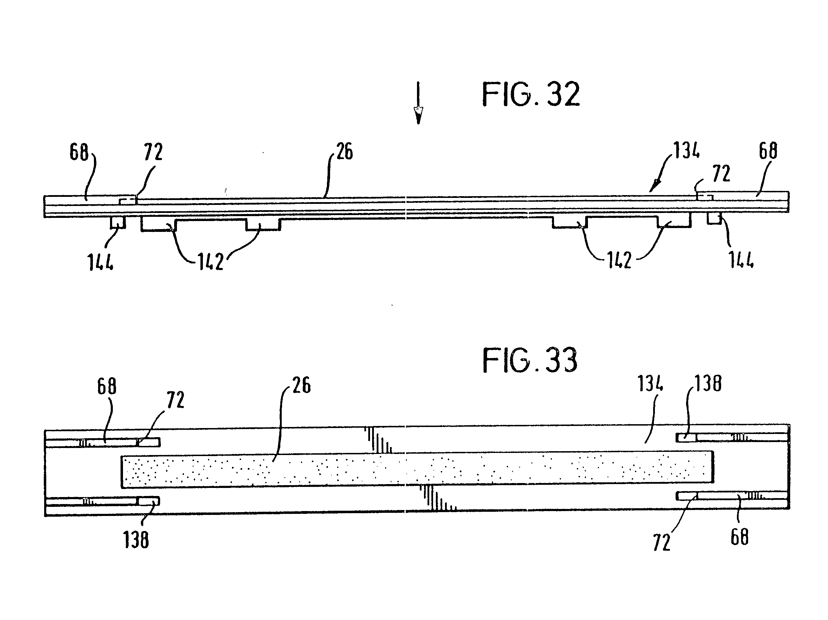

Die Gestaltung der Stege 134 läßt sich Fig. 32 und 33 entnehmen. Man erkennt, daß sie spiegelsymmetrisch gestaltet sind, also an beiden Enden Stufen 68 mit Kanten 72 aufweisen. Der Grund liegt darin, daß dann beim automatischen Beschichten der Stege mit dem Haftbelag kein Sortieren erforderlich ist. Allerdings sind dann zusätzlich Löcher 138 vorzusehen, durch die am griffseitigen Ende des Gehäuses an dessen Unterschale angeformte Auffahrkeile 140 für den Separatorsteg ragen. Die Befestigung der Stege in der Unterschale erfolgt durch Eindrücken der Nasen 142 in entsprechende Rinnen der Gehäuseunterschale, und die genaue Positionierung erfolgt mittels eines der beiden Zapfen 144, nämlich mittels des dem Schiebergriff abgewandten Zapfens, während dem anderen Zapfen ein gehäuseseitiges Langloch zugeordnet ist.

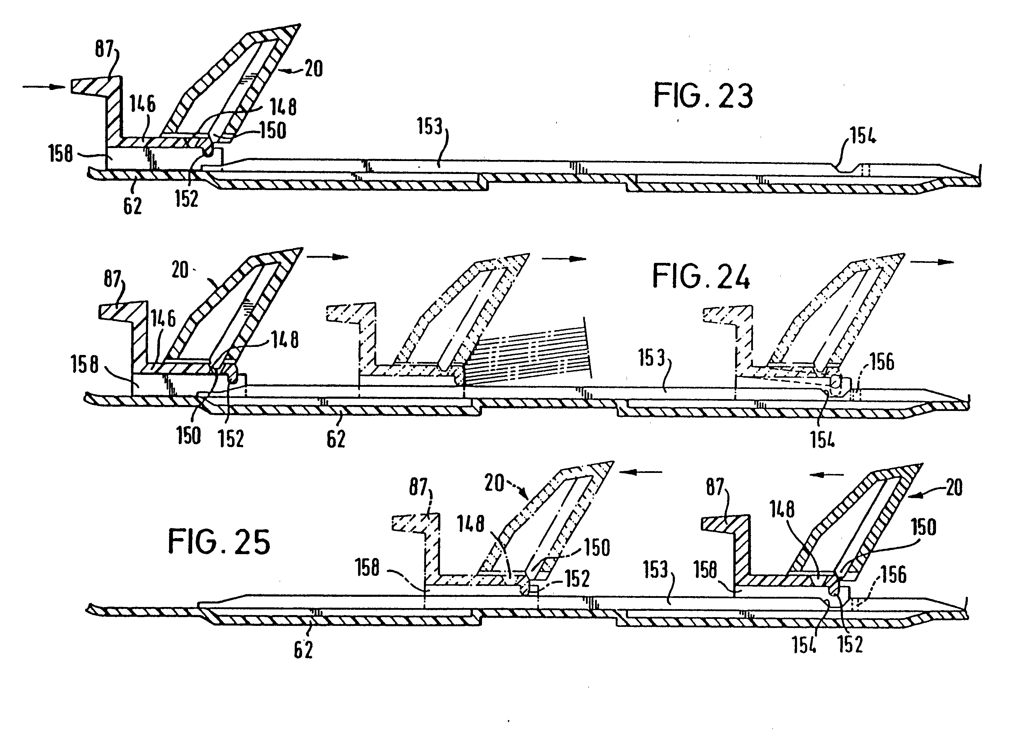

Die Stege 134 bilden zugleich die Führung für die in der Symmetrieebene angeordnete Taste 87, deren Gestaltung, Anordnung und Funktion schematisch in Fig. 23 bis 25 dargestellt ist. Fig. 23 zeigt die Betriebsposition, das heißt in dieser Position der Taste 87 erfolgt der normale Wechselvorgang. Die Taste 87 trägt einen auf den Separatorsteg 20 hin gerichteten Fortsatz 146 mit einer Kerbe 148, zu der komplementär ein Doppelkeil 150 an der Unterseite des Separatorsteges 20 ist. Drückt man nun bei festgehaltenem Schieber auf die Taste 87, so federt ihr Fortsatz 146 nach unten aus, bis der Doppelkeil 150 in die Kerbe 148 einrastet (Fig. 24, links). Die vom Fortsatz 146 nach unten ragende Sperrnase 152 blockiert nun die Trenneinrichtung für die Kante des untersten Bildes im Stapel, so daß bei Zug am Schieber die Haken 22 auch von der Kante dieses Bildes abgleiten, wenn der Separatorsteg zusammen mit der Taste 87 auf die ihm zugewandte Stapelkante einwirkt und den Stapel mitnimmt (Fig. 24, Mitte). Nahe der äußeren Endposition des Schiebers 14 trifft die Sperrnase 152 auf einen Einschnitt 154, während die Tastenführungslappen 158 auf einen Anschlag 156 auflaufen. Der Fortsatz kann demgemäß nach unten ausfedern, wenn der Schieber weitergezogen wird, und sich so vom Separator lösen (Fig. 24, rechts). Beim Wiedereinschub des Schiebers 14 ist die Taste lose beweglich, so daß der Doppelkeil sie einfach vor sich her schiebt, bis sie ihre Endposition wieder erreicht hat (Fig. 25).

Oben wurden unter Bezugnahme auf Fig. 9 bis 12 zwei Bauarten von Richtungswechsel-Sperren beschrieben. Beim vorliegenden Ausführungsbeispiel sind ebenfalls Sperren vorgesehen, die jedoch nur in den "kritischen" Phasen des Wechselzyklus wirken.

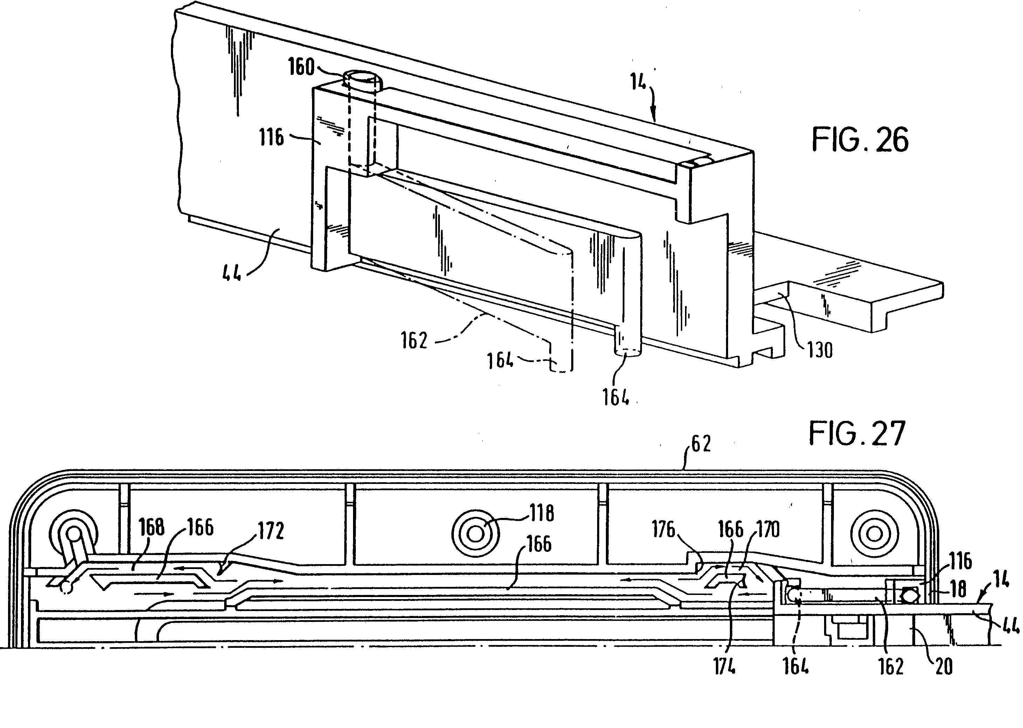

Im Lagerauge 116 des Schiebers 14 ist um einen Zapfen 160 schwenkbar eine Steuerklinke 162 angeordnet, die mit einem Steuernocken 164 längs Kanälen geführt ist, die durch an die Unterschale 62 angeformte Führungsschienen 166 definiert sind, so daß der Steuernocken 164 den in Fig. 27 mit Pfeilen markierten Pfaden beim Einschub bzw. beim Auszug folgen muß. Während des größten Teils des Wechselzyklus kann man ungehindert die Bewegungsrichtung umkehren, nicht jedoch dann, wenn sich der Steuernocken 164 während des Einschubs im Kanalabschnitt 168 bzw. während des Auszugs im Kanalabschnitt 170 befindet. Im ersteren Falle würde, wenn man kurz vor der inneren Endstellung des Schiebers diesen wieder herausziehen will, der Steuernocken auf den Anschlag 172 auflaufen; im letzteren Falle, wenn also kurz vor Erreichen der äußeren Endstellung der Schieber wieder eingeschoben wird, stößt der Steuernocken entweder auf den Anschlag 174 oder auf die Anschlagkante 176. Es ist anzumerken, daß der Zapfen 160 mit hinreichender Reibung im Lagerauge sitzt, daß die Steuerklinke zwar den Führungsstegen ohne merkbare Behinderung folgen, nicht aber frei pendeln kann.

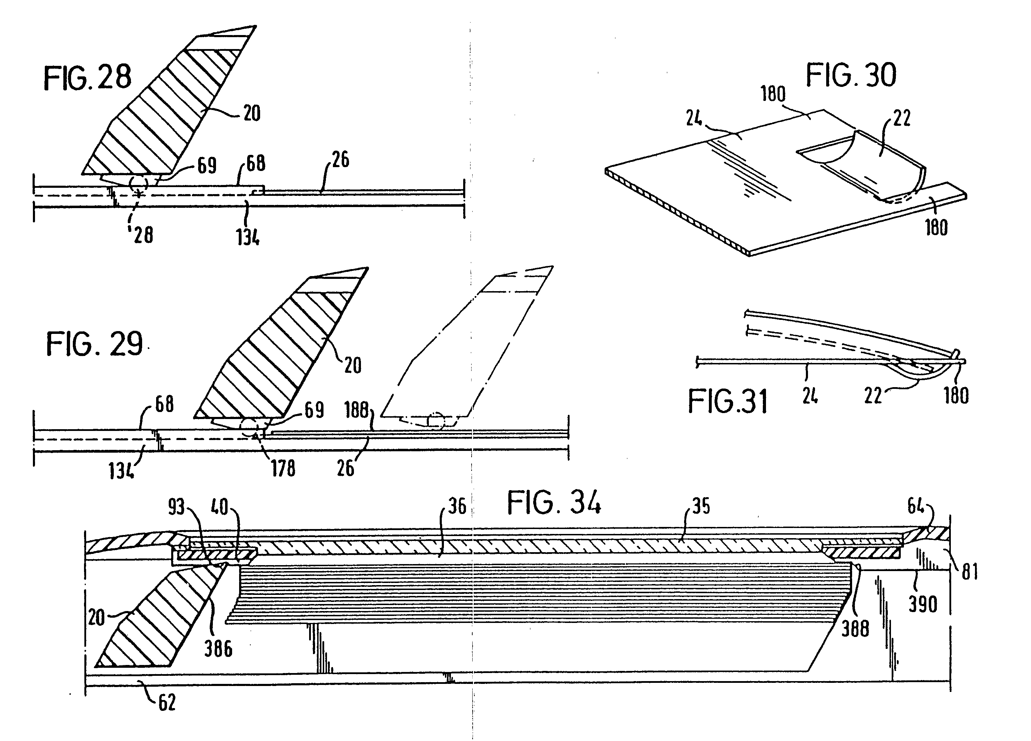

Fig. 28 und 29 lassen die Gestaltung der zusammenwirkenden Teile des Separatorsteges und der Haftbelag-Stege 134 erkennen. In der Ruheposition (Fig. 28), also bei ganz eingeschobenem Schieber 14, sitzen die Schuhe 69 auf den Stegen seitlich auf, während die Andruckrollen 28 in eine Ausnehmung hinter dem Haftbelag ragen, so daß ihre Lager entlastet sind und keine Deformation durch Kaltfluß eintreten kann. Bei Beginn des Wechselzyklus (Fig. 29) laufen die Rollen dann erst auf eine Stufe 178 auf und werden damit auf das Niveau der vor dem Haftbelag 26 liegenden Flächen gehoben, während die Schuhe sich auf dem Niveau der Stufe 68 befinden. Die Niveaudifferenz zwischen 68 und 178 ist funktionsbedeutsam, weil sie auf die Bilderdicke abgestimmt ist; beide Niveaus befinden sich an demselben Spritzgußteil, so daß die Toleranz extrem klein ist. Der Auflauf der Rollen 28 auf die Bildkante ist problemlos.

Fig. 30 zeigt das Ende des Federarms 24 mit dem Mitnehmer 22. Beidseits des Mitnehmers erstrecken sich noch Fortsätze 180, die die Aufgabe haben, sich an das Bild von unten anzulegen und damit zu verhindern, daß die in Fig. 30 gestrichelt dargestellte Situation eintreten kann, daß nämlich ein stark gekrümmtes Bild sich so tief in den Haken 22 setzt, daß dieser von der Kante nicht mehr abrutschen kann. Diese Möglichkeit muß aber gegeben sein, damit der Gesamtstapel mittels der Taste 87 entnommen werden kann.

Fig. 34 zeigt in vereinfachter und vergrößerter Darstellung einen Längsschnitt durch die zusammengeschobene Vorrichtung. Wie in Fig. 1 bis 10, hat auch hier der Separatorsteg mittig eine Erhöhung 93, die zwischen Niederhalter 40 greift. Wenn jedoch beim Herausziehen des Schiebers das oberste Bild nur noch seitlich von den Schienen 36 abgestützt wird, besteht die Gefahr, daß das oberste Bild oder sogar mehrere vom Separator abgleiten. Dies wird dadurch verhindert, daß die Niederhalter 81 am Gehäuse noch eine schräge Stufe 388 aufweisen, die zumindest das oberste Bild solange bremsen, bis seine gegenüberliegende Kante an der Unterfläche 386 des Separators anliegt und von dessen Fortsatz 93 übergriffen ist. Durch die Reibung des Bildes an der Unterfläche 390 der Niederhalter 81 wird dieser Zustand aufrechterhalten, auch wenn die Bilder (Fotoabzüge) stark gekrümmt sind.

In den vorstehend beschriebenen Ausführungsbeispielen wirken die Röllchen 28 mit den im Gehäuse 12 ortsfest angebrachten Haftbelägen 26 zusammen. Dieses und weitere erfindungsgemäße Konzepte sind in den Fig. 35 – 41 gezeigt, wobei nur die notwendig zum Verständnis erforderlichen übrigen Bauteile mit gezeichnet sind.

Fig. 35 bis 37 beziehen sich auf einen anderen Typ der Halteeinrichtung für das zu vereinzelnde Bild.

Fig. 35 zeigt in einem schematisierten Längsschnitt eine Vorrichtung gemäß der Erfindung. Fig. 36 ist ein Teilquerschnitt zu dieser Figur, und Fig. 37 zeigt einen Teilhorizontalschnitt.

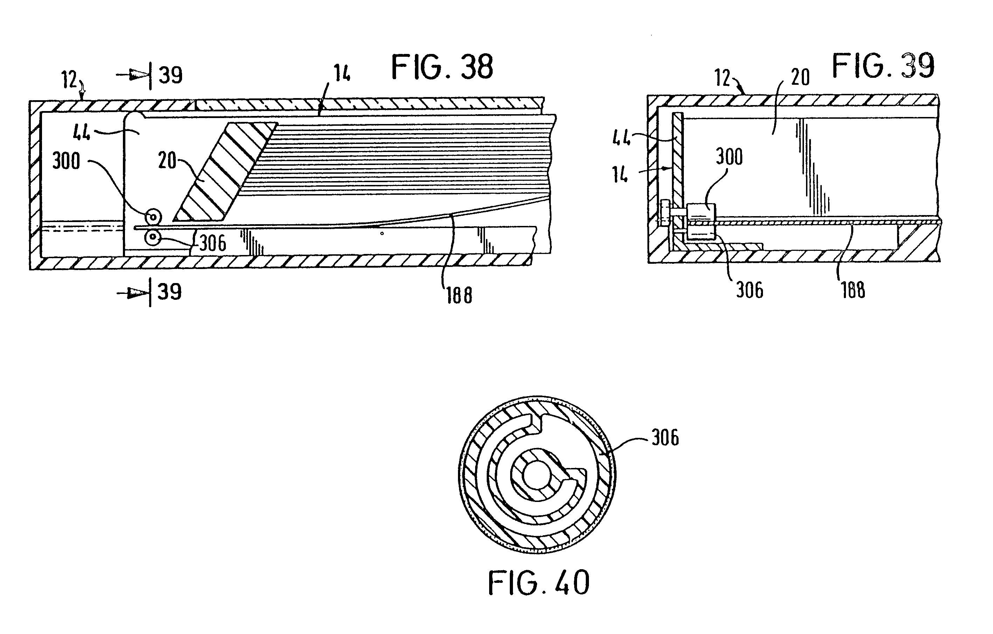

Die Vorrichtung nach Fig. 38 bis 40 zeigt eine weitere Ausführungsform der Halteeinrichtung gemäß der Erfindung. Das Einzelblatt 188 gelangt hinter dem Separatorsteg 20 in den Arbeitsspalt zwischen zwei Walzen 300, 306, von denen mindestens eine in derselben Art angetrieben ist wie bei Fig. 35 bis 37 beschrieben. Die andere Walze kann auch direkt von der ersten angetrieben sein, oder aber durch Reibung mitgenommen werden. Der Anpreßdruck wird dadurch erzeugt, daß eine der Walzen, vorzugsweise die nicht angetriebene, in sich federnd ausgebildet ist und ihre Welle etwas näher an die andere Walze herangerückt ist als dem Durchmesser eigentlich entsprechen würde. Der Querschnitt durch eine solche federnde Walze ist in Fig. 40 dargestellt, und man erkennt, daß Ausnehmungen in sich geschlossen mäanderförmig rings um die Nabe erstrekken, so daß immer genug Federweg zur Verfügung steht.

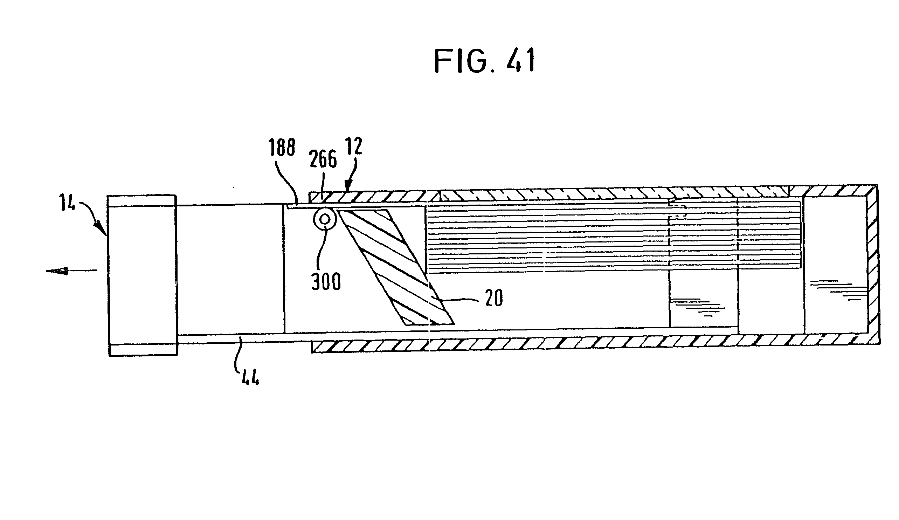

Fig. 41 zeigt eine im Gehäuse 12, das hier das zweite Rahmenteil ist, drehbar gelagerte Walze 300, die über eine in den Schieberholmen 44 angebrachte Zahnstange (nicht gezeigt) und ein mit der Walze verkeiltes Ritzel (nicht gezeigt) zu einer Umfangsgeschwindigkeit angetrieben wird, die gleich ist der Auszugsgeschwindigkeit des Schiebers. Auf diese Weise wird das vereinzelte Bild 188 hinter dem Separatorsteg 20 erfaßt, gegen die Gehäusedeckwand 26 gepreßt, an der es entlang schleift, und in der äußeren Schieberendlage freigegeben. Es versteht sich, daß als Zufuhreinrichtung jeweils eine der in Fig. 1 bis 34 sowie 42 bis 82 dargestellten Anordnungen vorgesehen ist, ohne daß dies jedesmal mit gezeichnet wurde.

Mit den beschriebenen Halteeinrichtungen können unterschiedliche Zufuhreinrichtungen zusammenwirken, die in Fig. 42 bis 60 gezeigt sind. Hinsichtlich der Vereinfachung der Darstellung gilt das zu Fig. 35 bis 41 Gesagte sinngemäß. Im ü.igen ist anzumerken, daß die erfindungsgemäße Halteeinrichtung durchaus durch weitere Mittel ergänzt werden kann, etwa zangenartig das vereinzelte Bild festklemmende Organe.

Fig. 42 bis 49 stellen zunächst das Prinzip dar. Man erkennt in Fig. 42 das erste Rahmenteil in Form des im wesentlichen rechteckigen Gehäuses 12, in dem gleitbeweglich der Schieber 14 als zweites Rahmenteil aufgenommen ist. Die Trenneinrichtung ist nur symbolisch als Separatorsteg 20 angedeutet. Der Stapel gleichformatiger Blätter ist mit 182 angedeutet.

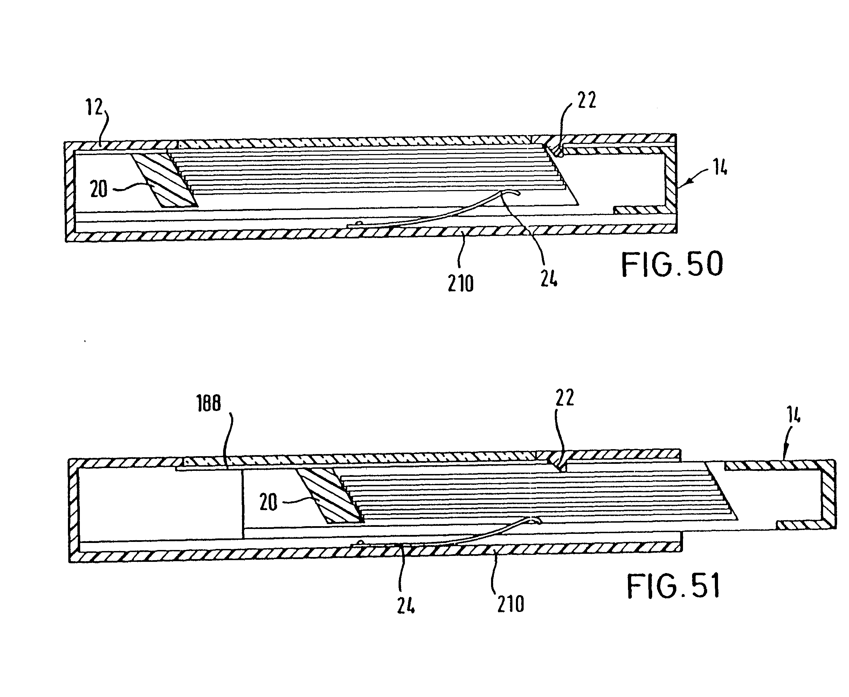

Fig. 50 und 51 stellen schematisch dar, daß die erfindungsgemäße Ausgestaltung auch nach dem Prinzip der kinematischen Umkehr so arbeiten kann, daß die Schrägfläche 22 starr an dem ersten Rahmenteil – hier in Form eines Gehäuses – vorgesehen, zum Beispiel angespritzt ist, während die Federvorspannung durch eine an die gegenüberliegende Wandung 210 angeheftete Blattfeder 24 bewirkt wird Fig. 50 zeigt den Ruhezustand, Fig. 51 den Beginn des Auszugshubes des anderen Rahmenteils in Form eines Schiebers, wobei das Einzelblatt 188 bereits abgetrennt ist.

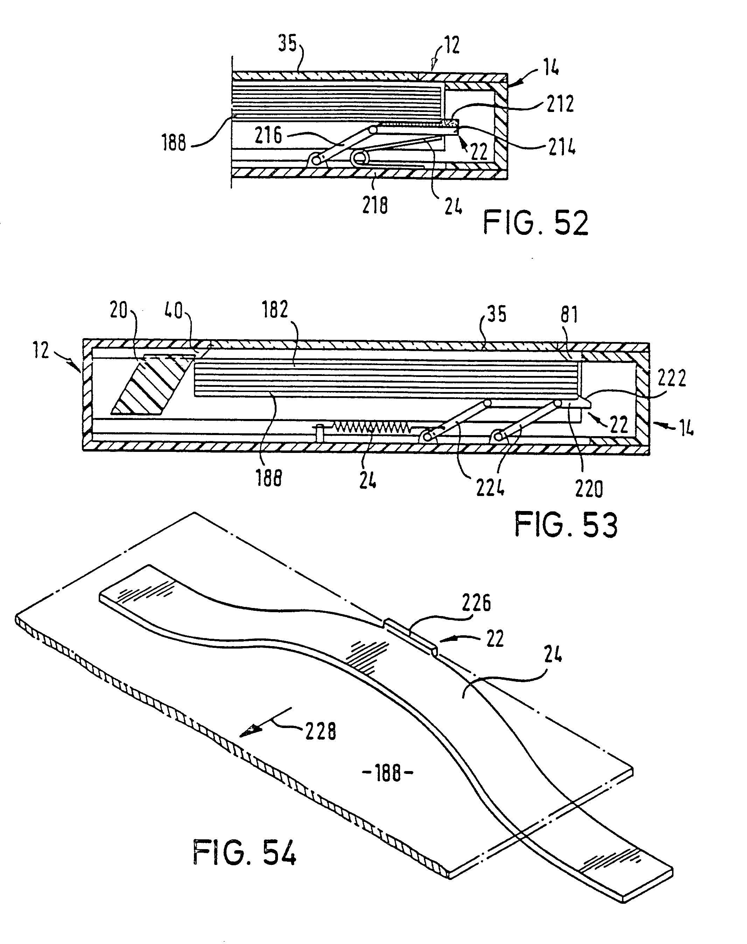

Fig. 52, 53 und 54 schließlich zeigen weitere Ausgestaltungen der erfindungsgemäßen Vorrichtung.

In Fig. 52 ist der Mitnehmer 22 von einem kompressiblen Belag 212 auf einer Trägerplatte 214 gebildet, die mittels Lenker 216 am Boden 218 eines der Rahmenteile angelenkt ist. Eine Schenkelhalsfeder 24 drückt den Mitnehmer in Anlage an die hintere Kante des abzutrennenden Blattes 188.

Gemäß Fig. 53 ist der Mitnehmer 22 als eine Platte 220 ausgebildet, die mit einer hochstehenden Leiste 222 die hintere Kante des abzutrennenden Blattes 188 hintergreift. Die Vorspannanordnung umfaßt eine Schraubenzugfeder 24, die irgendwo stationär eingehangen ist und an eine Parallelogrammgestängeanordnung 224 angreift, an die die Mitnehmerplatte angelenkt ist. Auf diese Weise ist der Mitnehmer unabhängig von der Stapeldicke parallel zu seiner Hauptebene gehalten.

Gemäß Fig. 54 ist der Mitnehmer 22 ein Fortsatz 226, abgewinkelt von einer Blattfeder 24, die sich quer zu der durch den Pfeil 228 symbolisierten Bewegungsrichtung des abzutrennenden Blattes 188 erstreckt; auch hier ist der Mitnehmer im wesentlichen immer in derselben Wirkungsposition bezüglich der Blattkante unabhängig von der Zahl der Blätter im Stapel.

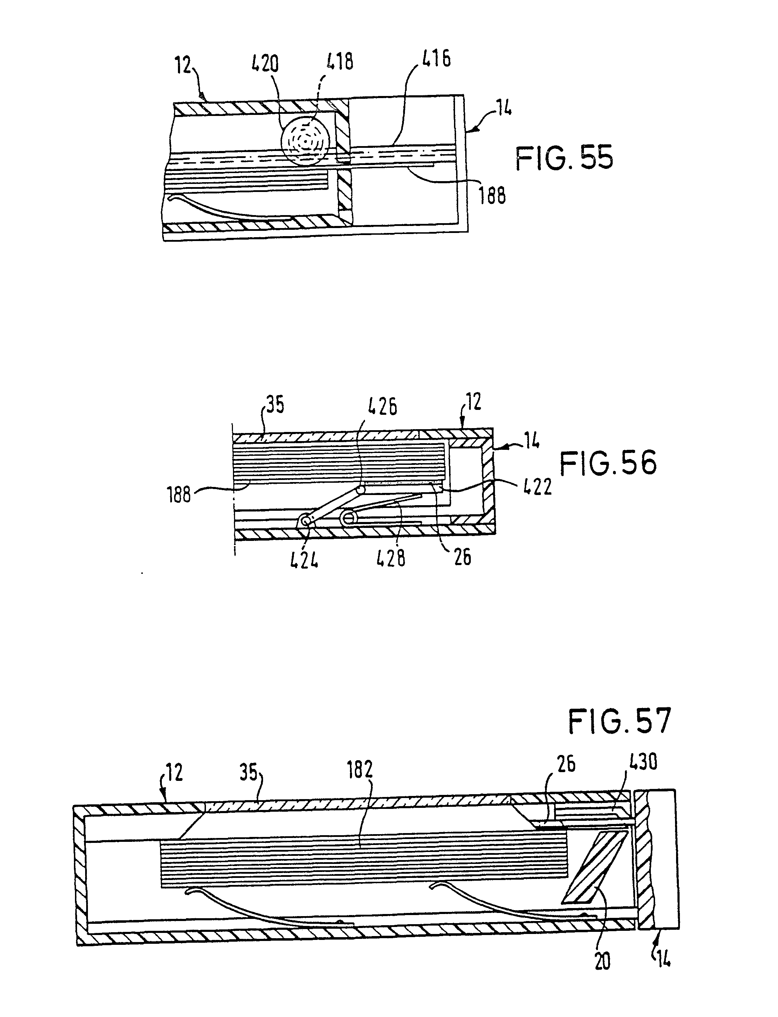

Fig. 55 bis 60 zeigen, weitgehend schematisiert, unterschiedliche weitere Zufuhrsysteme nach anderen Prinzipien.

Gemäß Fig. 55 weist das erste Rahmenteil eine angeformte Zahnstange 416 auf, mit der ein im zweiten Rahmenteil drehbar gelagertes Ritzel 418 kämmt und bei der Relativbewegung eine Mitnehmerwalze 420 antreibt, die das zu vereinzelnde Blatt 188 reibungsschlüssig mitnimmt.

Fig. 56 zeigt eine Ausführungsform mit einer Platte 422, die einen Haftbelag 26 trägt, der das an ihm anliegende Blatt reibungsschlüssig mitzunehmen in der Lage ist. Die flächige Anlage wird durch die Aufhängung der Platte über ein erstes Gelenk 424 und ein zweites Gelenk 426 sowie eine Vorspannfeder – hier eine Schenkelhalsfeder 428 – sichergestellt.

Fig. 57 stellt eine Ausführungsform dar, bei der ebenfalls die Zuführeinrichtung mittels eines Haftelementmitnehmers arbeitet. Hier ist das erste Rahmenteil als Schieber, das zweite Rahmenteil als Gehäuse ausgebildet. Am Schieber 14 ist ein Haftelementmitnehmer 26 angeordnet, der das zu vereinzelnde Blatt vom Stapel 182 abzieht und der Trenneinrichtung zuführt, die hier einfach als Separatorsteg 20 gezeichnet ist. Im zweiten Rahmenteil (also dem Gehäuse 12) ist eine Steuerkulisse 430 ausgebildet, längs der der Haftelementmitnehmer über den Separatorsteg ohne Kontakt mit diesem hinweggeführt wird.

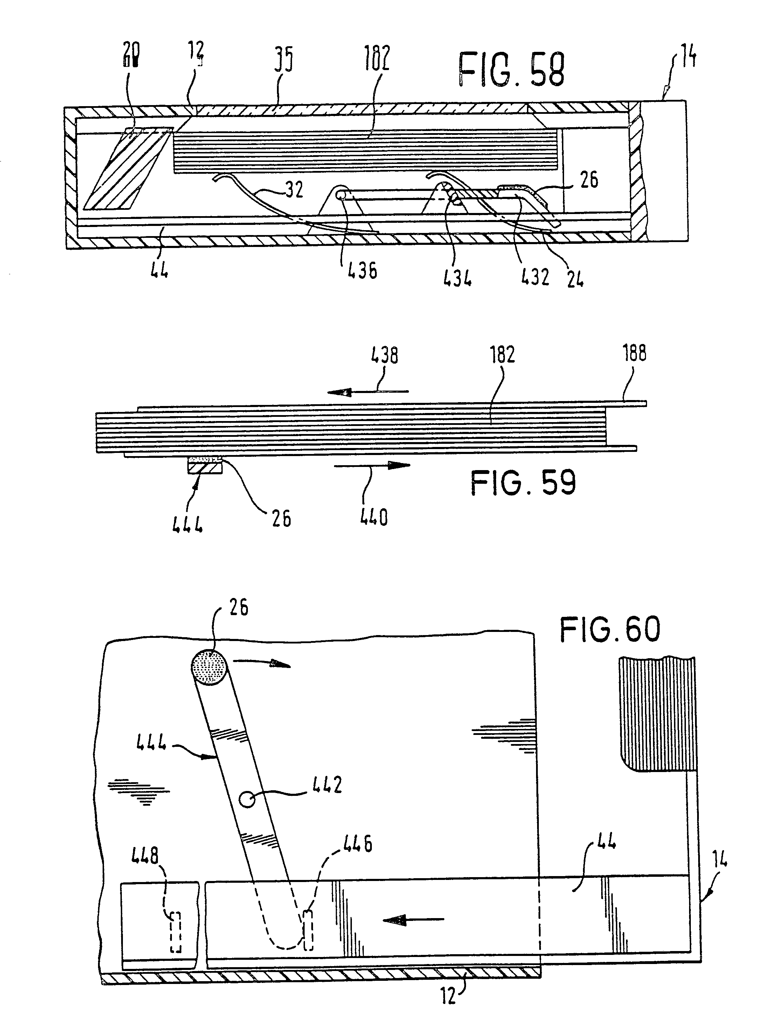

In Fig. 58 ist angedeutet, wie ein Haftmitnehmer 26, nahe dem freien Ende eines Hebels 432 angeordnet, durch Auflaufen einer Steuerschräge 434 am zweiten Rahmenteil (Schieber 14) um seinen Anlenkpunkt 436 am ersten Rahmenteil (Gehäuse 12) in Anlage an das ihm zugewandt liegende Blatt des Stapels verschwenkt wird und so auf einem Teilhub der Relativbewegung dieses Blattes der Trenneinrichtung zuführt, symbolisiert durch den Separatorsteg 20.

Fig. 59 zeigt in schematischer Seitenansicht, Fig. 60 in Teilschnitt-Draufsicht eine Zufuhreinrichtung, die nicht erst zu Beginn eines Auszugshubes der Rahmenteile wirksam wird, sondern bereits beim letzten Einwärts-Teilhub des vorhergehenden Wechselvorgangs.

In ähnlich schematischer Weise, wie die Zufuhreinrichtungen dargestellt und beschrieben sind, werden nachstehend Trenneinrichtungen erläutert, die bei dem erfindungsgemäßen Bildwechsler angewandt werden können.

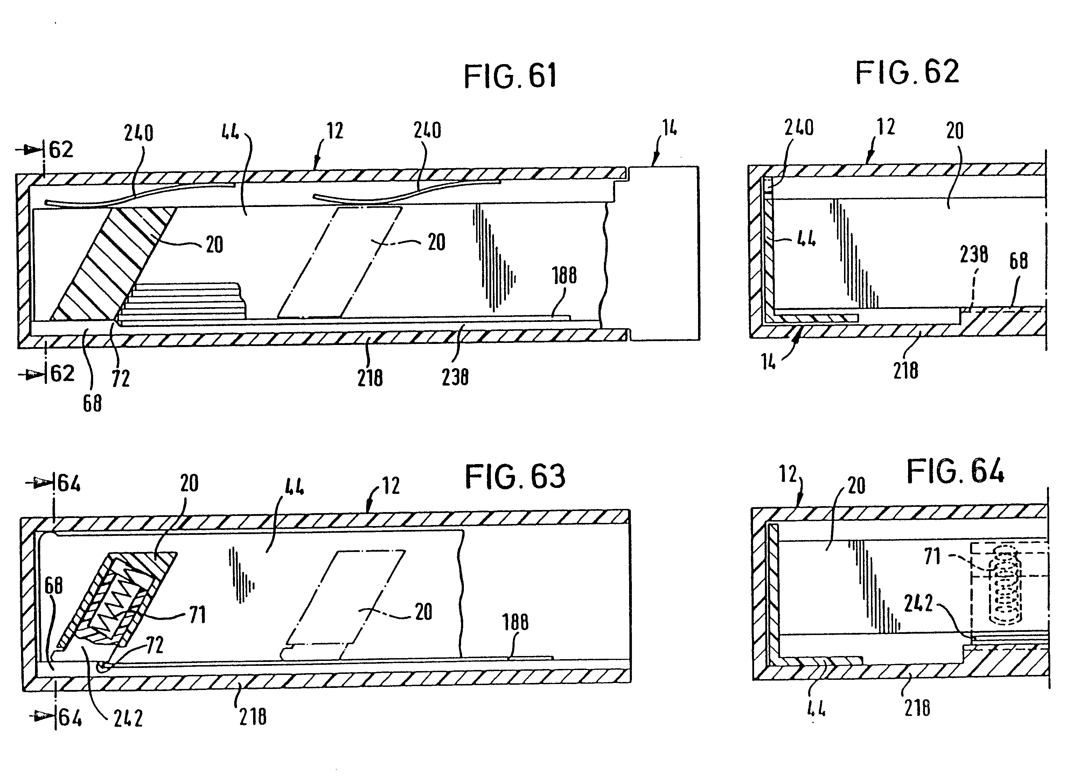

Die Fig. 61 bis 76 stellen alternative Trenneinrichtungen dar.

Fig. 61 zeigt im schematischen Längsschnitt einen Fotowechsler, und Fig. 62 ist ein zugehöriger Teilquerschnitt. Das erste Rahmenteil ist als Gehäuse 12 ausgebildet, an das ein erstes, stationäres Trennelement in Form einer Rippe 238 angeformt ist, die auf dem Gehäuseboden 218 sitzt. Das zweite Trennelement wird von einem Separatorsteg 20 gebildet, der an einem relativ zu dem Gehäuse verschieblichen und das zweite Rahmenteil bildenden Schieber 14 angeformt ist. Der Schieber 14 wird von einem Blattfedersystem 240, das im Gehäuse montiert ist, auf seiner ganzen Auszugslänge in Richtung Gehäuseboden gedrückt und damit in Richtung auf die Rippen 238.

Die Ausführungsform nach Fig. 63 (Längsschnitt) und 64 (Teilquerschnitt) unterscheidet sich von der zuvor beschriebenen dadurch, daß nicht der gesamte Schieber 14, sondern nur ein Teil 242 des Separatorsteges 20 von einer im letzteren selbst untergebrachten Federanordnung 71 in Richtung Gehäuseboden 218 gedrückt wird, während der Schieber in dieser Richtung abgestützt ist. Die Funktion ist im übrigen dieselbe.

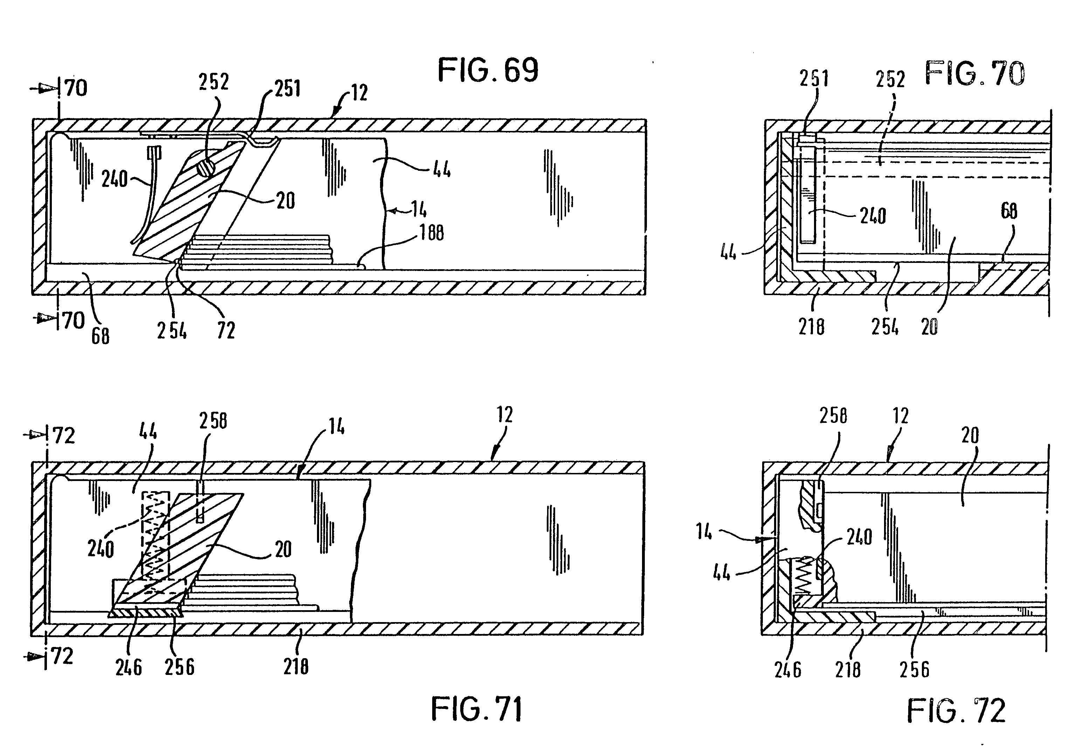

Die Ausführungsform nach Fig. 65 (Längsschnitt) und 66 (Querschnitt) unterscheidet sich von der nach Fig. 61, 62 dadurch, daß zwar auch hier der Schieber von dem Blattfedersystem 240 in Richtung Gehäuseboden 218 gedrückt wird, jedoch keine Stufe am Gehäuse vorgesehen ist; vielmehr sind an den Separatorsteg 20 beidseits des Blattdurchlaßspaltes 244 Schuhe 246 angeformt, die sich auf dem Gehäuseboden 218 abstützen und so ständig die lichte Weite des Spalts auf dem gewünschten Wert halten.

Die Ausführungsform nach Fig. 67 (Längsschnitt) und 68 (Teilquerschnitt) ist eine Modifikation der Ausführung nach Fig. 63 und 64. Zwischen den Schieberholmen 44 ist eine Halterung 248 angeformt, die ein stationäres Ende einer breitseitig eingespannten, elastischen Blattfeder 250 hält.

Das abgerundete Ende der Blattfeder folgt der Stufe 68 und legt sich nach Passieren von deren Kante 72 auf das vereinzelte Blatt 188.

Die Ausführungsform nach Fig. 69 (Längsschnitt) und 70 (Teilquerschnitt) weist ebenfalls ein relativ zum Schieber 14 federnd auslenkbares Trennelement in Form eines Separatorsteges 20 auf, der in den Schieberholmen 44 um eine Welle 252 schwenkbar ist, jedoch von einer Federanordnung 240 mit seiner Kante 254 in Anlage an dem jeweils gegenüberliegenden Teil gehalten ist, also zunächst an der Stufe 68 und nach Passieren von deren Kante 72 an dem vereinzelten Blatt 188.

Die Ausführungsform nach Fig. 71 (Längsschnitt) und 72 (Teilquerschnitt) umfaßt als erstes Rahmenteil ein Gehäuse 12, als zweites Rahmenteil einen Schieber 14. Zwischen den Holmen 44 des Schiebers ist eine Fußplatte 256 eingefügt, die ein erstes Trennelement bildet. Das zweite Trennelement ist ein relativ zum Schieber in Richtung Gehäuseboden 218 von einer Federanordnung 240 vorgespannter Separatorsteg 20, der an Schienen 258 geführt ist und an seinem unteren Ende beidseits des zu vereinzelnden Blattes Anschlagschuhe 246 aufweist.

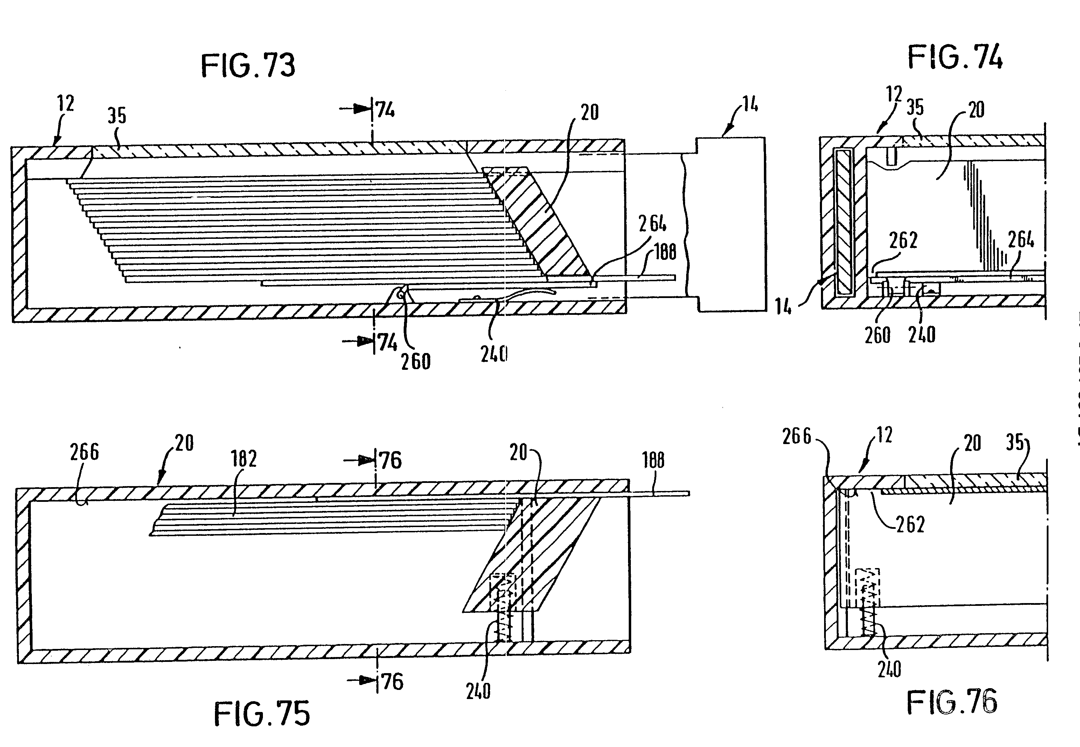

Die Fig. 73 (Längsschnitt) und 74 (Teilquerschnitt) zeigen eine Ausführungsform, bei der das erste Rahmenteil von einem Schieber 14 gebildet ist, der relativ zu einem Gehäuse 12 als zweiten Rahmenteil hin- und herverschieblich ist. Es versteht sich, daß hier wie auch bei allen anderen Ausführungsformen der maximale Hub des Schiebers durch Anschläge begrenzt ist, die aber der Klarheit wegen nicht gezeichnet sind. – An das Gehäuse 2 ist einstückig als erstes Trennelement ein Separatorsteg 20 angeformt, dem gegenüber ein zweites Trennelement in Form einer angelenkten (Gelenk 260) Platte 264 vorgesehen ist, die von einer Feder 240 in Anlage an seitlichen Stützfortsätzen 262 des Separatorsteges gedrückt wird. Die Platte 264 kann also fertigungsbedingte Toleranzen auffangen, während die Spalthöhe stets durch die Höhe der Fortsätze 262 festgelegt ist, die praktisch unveränderlich ist.

Die Fig. 75 (Längsschnitt) und 76 (Teilquerschnitt) zeigen eine Ausführungsform, bei der das Gehäuse 12 das zweite Rahmenteil bildet und ein (nicht gezeichneter) Schieber das erste Rahmenteil. Am Gehäuse ist ein Separatorsteg 20 gleitbeweglich quer zur Stapelhauptebene geführt und steht unter Vorspannung durch eine Federanordnung 240. Mit seinen Stützfortsätzen 262 definiert er die Spalthöhe, die auf der anderen Seite durch die Gehäusedeckwand 266 definiert wird.

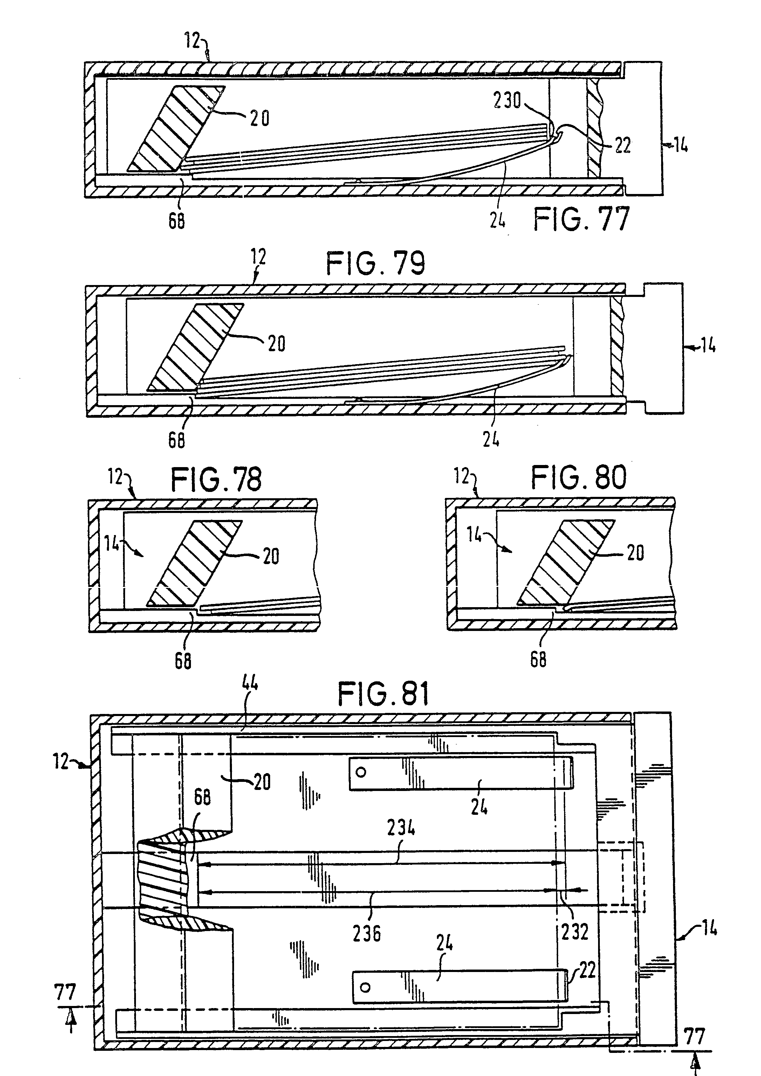

Die Fig. 77 bis 81 dienen der Erläuterung des sogenannten Längenausgleichs. Da die Blätter zwar nominell gleiche Abmessungen haben, diese aber – insbesondere bei Fotoabzügen – stark toleranzbehaftet sein können, besteht ein Risiko der Funktionsstörung, wenn im Stapel stark unterschiedlich große Blätter aufeinanderfolgen. Die Lösung dieses Problems ist aber möglich.

Fig. 77 bis 81 illustrieren die Maßnahmen, die getroffen werden können, um die Zufuhr auch dann sicherzustellen, wenn der Stapel Blätter mit erheblichen Abmessungsunterschieden in Richtung der Wechselbewegung enthält.

Fig. 77 zeigt im Längsschnitt die Situation nach einem Wechselzyklus. Ein am Schieber 14 vorgesehener Anschlag hat die dem Separator 20 abgewandten Kanten der Blätter ausgerichtet, so daß ihre unterschiedlich weit aus dem Stapel herausragenden Enden – bzw. in diesen zurückstehenden Endkanten – die in Fig. 77 angedeutete Konfiguration bilden. Der Fall, daß über einem kürzeren Blatt ein längeres Blatt liegt, ist in Fig. 78 noch einmal gesondert gezeichnet, und Fig. 79 stellt schematisch dar, was geschehen könnte, würde nicht für einen Ausgleich gesorgt. Das zweitunterste Blatt legt sich mit seiner frei vorstehenden Kante über die Endkante des untersten Blattes, und bei Auflaufen des Separatorsteges 20 wird die in Fig. 80 gezeigte Situation eintreten, bei der der Wechselvorgang gestört ist ("Doppelblattwechsel"). Um dies zu verhüten, sind Mittel vorgesehen, um zunächst einmal die Kanten der Blätter auf der dem Separatorsteg zugekehrten Seite des Stapels etwas auszurichten. Hierzu dient zunächst ein "Leerhub" des Separatorsteges 20, bis er die Stufe 68 überläuft. Während dieses Hubes erfolgt also noch keine Trennung. Gleichwohl werden die dem Separatorsteg abgewandten Endkanten der Blätter bereits auf diesem Leerhubweg von einer ersten Kontaktfläche 230 abgestützt. Blätter, die Übermaß haben, werden vom Separatorsteg zurückgedrückt und springen von der Kontaktfläche 230 ab; Blätter mit Untermaß bleiben noch auf der ersten Kontaktfläche. Die von dieser abgesprungenen Blätter werden jedoch von einer zweiten Kontaktfläche 22 aufgefangen, die in einem Abstand 232 hinter der ersten vorgesehen ist, der der höchstzulässige Längendifferenz der Blätter entspricht. In Fig. 81 ist das kürzeste Blatt durch Pfeil 234, das längste durch Pfeil 236 symbolisiert. Wenn der Separatorsteg seinen Leerhub durchlaufen hat, sind also die kürzeren Blätter von der ersten, die längeren von der zweiten Kontaktfläche abgestützt, so daß sich im Bereich der dem Separatorsteg zugekehrten Blattkanten etwa die in Fig. 79 gezeichnete Situation ergibt. – Es genügt dabei, wenn der Längenausgleich nur ungefähr erfolgt, so daß die Blätter nicht mehr biegsam genug sind, um die Situation nach Fig. 80 eintreten zu lassen.

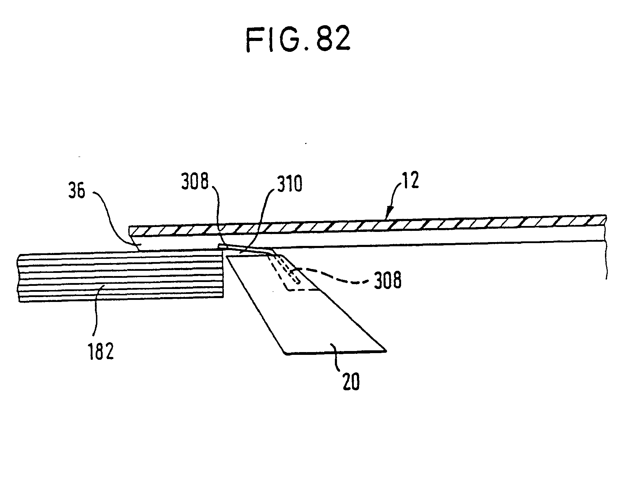

In ähnlich vereinfachter Weise wie die Zufuhr- und Trenneinrichtungen sind in Fig. 82 bis 98 Gestaltungsmerkmale und gegenüber 1 bis 34 alternative Ausführungsformen der Leitrichtung dargestellt, die im Rahmen des erfindungsgemäßen Konzepts einsetzbar sind. ·

Fig. 82 zeigt im schematisierten Längsteilschnitt eine Bauart, die sowohl den Reststapel für den Einschub des vereinzelten Blattes niederhält als auch den Rückkehr-Durchlaß während des Wechselzyklusbeginns blockiert.

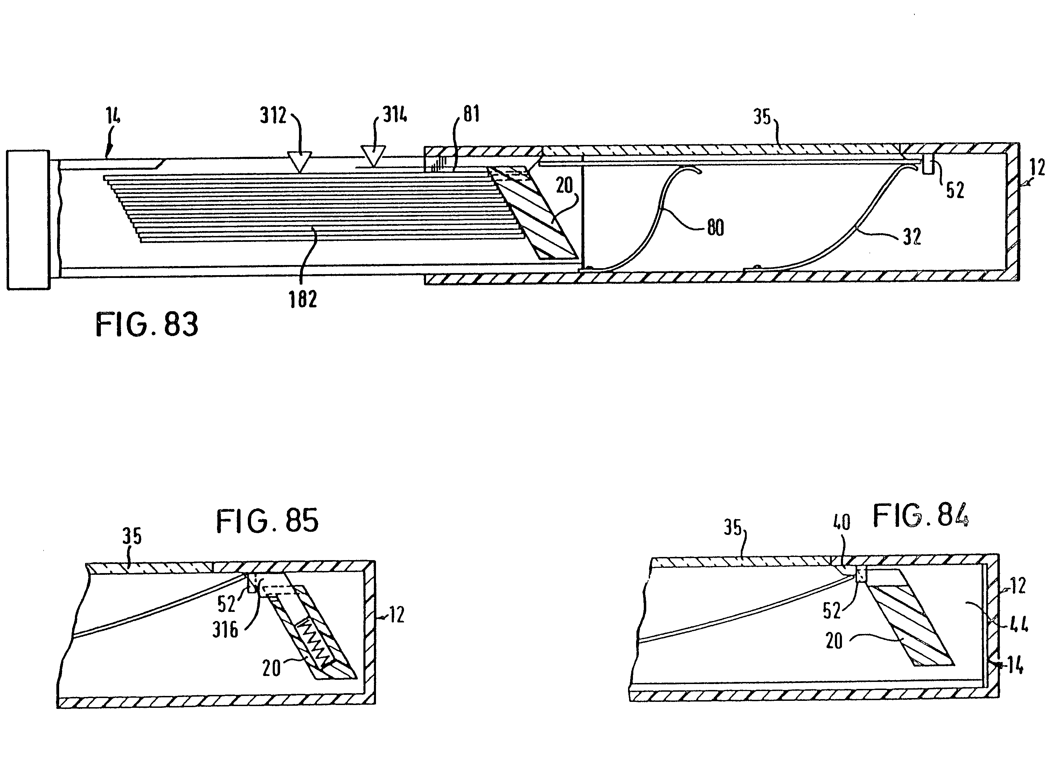

Fig. 83 zeigt im schematisierten Schnitt die bevorzugten Mittel: Feder 32 hält die hintere Blattkante vor dem Schiebeanschlag 52, Feder 80 unterstützt das Blatt etwa mittig, und hinter dem Separatorsteg 20 wird der Reststapel 182 auf einem Niveau gemäß Pfeil 132 gehalten, indem die Niederhalter 81 auf ihn einwirken. Der Pfeil 314 definiert das Niveau derjenigen Kante des Separatorstegs, die vom Einzelblatt überlaufen wird und die im kämmenden Eingriff mit den Niederhaltern steht.

Fig. 84 stellt in schematischer Teilseitenschnittansicht eine Konstruktion dar, mit der verhindert wird, daß bei der Abtrennphase des Wechselzyklus auf dem Durchlaß für die Blattrückführung fälschlicherweise auch ein Blatt in den Spalt gelangen kann. Dies erfordert hier die Rippen 40, welche kammartig in Ausnehmungen des Separatorsteges 20 greifen.

Alternativ sind in Fig. 85 aus dem Separatorsteg ausfahrende Sperrglieder 316 dargestellt, die den Durchlaß erst freigeben (entweder durch Federwirkung infolge Keilauflauf oder zwangsgesteuert), wenn in der Rückführphase eine Blattkante ansteht ("Rückschlagventilprinzip").

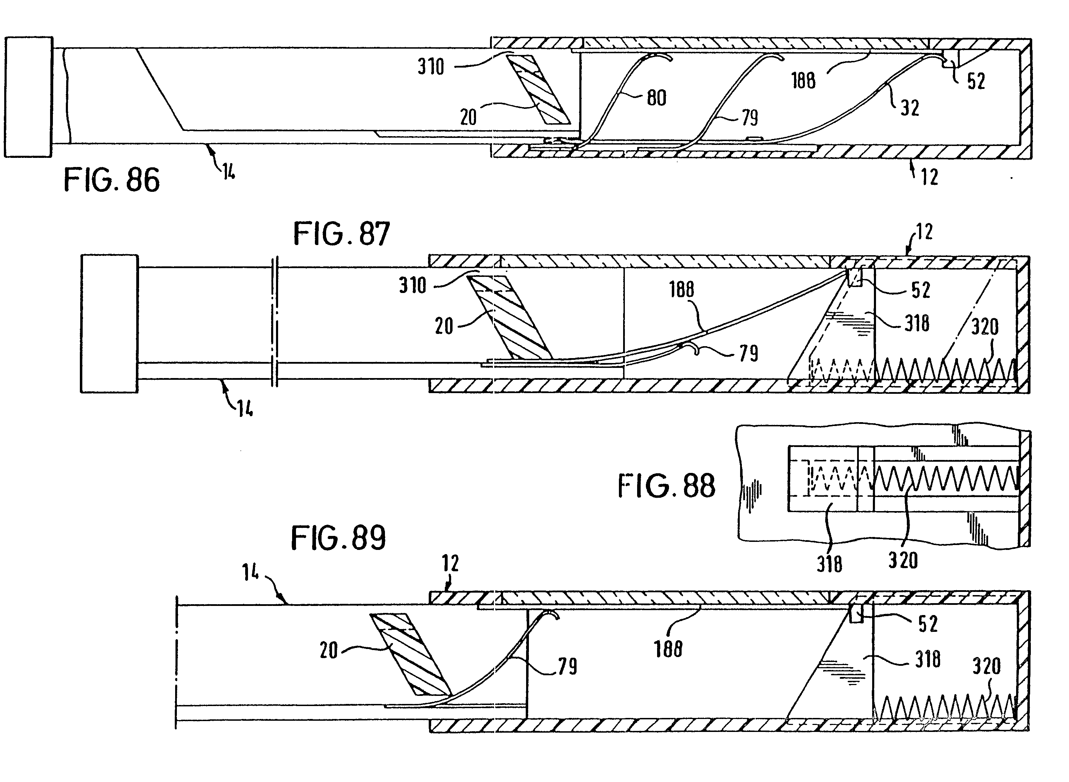

Fig. 86 zeigt im schematisierten Längsschnitt ganz prinzipiell diese Mittel: Eine erste Blattfeder 32 klemmt das Einzelblatt 188 vor dem "schiebenden" Anschlag 52, und weitere Blattfedern 79, 80 drücken das Blatt möglichst eben an die Deckwand des Gehäuses 12 (erstes Rahmenteil), um die führende Kante des Einzelblattes einigermaßen genau vor dem Durchlaß 310 zu präsentieren. Die Zuverlässigkeit wird umso besser sein, je länger die Blattfedern an dem Einzelblatt während des Blattrücklaufs angreifen, ehe diese Federn von dem Separatorsteg 20 der Trenneinrichtung überlaufen werden. Die dem Einzelblatt 188 zugekehrte Seite des Separatorsteges ist vorzugsweise derart abgeschrägt, daß eine vor ihm abwärts gewölbte führende Kante des Einzelblattes längs der Schräge "heraufklettern" kann infolge der Keilwirkung dieser Schräge. Wird jedoch diese Blattkante durch andere Mittel dem Rückführdurchlaß zwangsweise präsentiert, kann die entsprechende Fläche des Separatorsteges auch senkrecht zur Blattebene verlaufend ausgebildet sein.

Anstelle der Blattfeder 32 kann man andere Mittel verwenden, um die dem Separatorsteg abgewandte Kante des Einzelblattes an die andere Gehäusekante zu verlagern. Dies ist in Fig. 87 dargestellt: Ein Keil 318 ist von einer Feder 320 unter diese Kante des Blattes 188 geschoben worden und hat sie vor den schiebenden Anschlag 52 gehoben, und zwar noch während der ersten Hälfte des Wechselzyklus. Die andere Blattkante wird dann, nach Passieren des Separatorsteges 20, von einer Blattfeder 79 vor den Rückführdurchlaß 310 gehoben. Gegen Ende der zweiten Phase des Wechselzyklus schiebt dann der Separatorsteg den Keil 318 zurück. – Anstelle der Feder 320 könnte der Keil 318 auch durch eine Kopplung mit dem zweiten Rahmenteil, allerdings mit Phasenverschiebung, von diesem hin- und herverlagert werden. – Anstelle des verschieblichen Keils könnten auch ein- und ausschwenkbare schräge Keilflügel vorgesehen sein, ohne daß sich am Wirkprinzip etwas ändert. Fig. 88 zeigt schematisch die Draufsicht auf den Keil 318, und Fig. 89 stellt die Situation am Umkehrpunkt des Wechselzyklus dar.

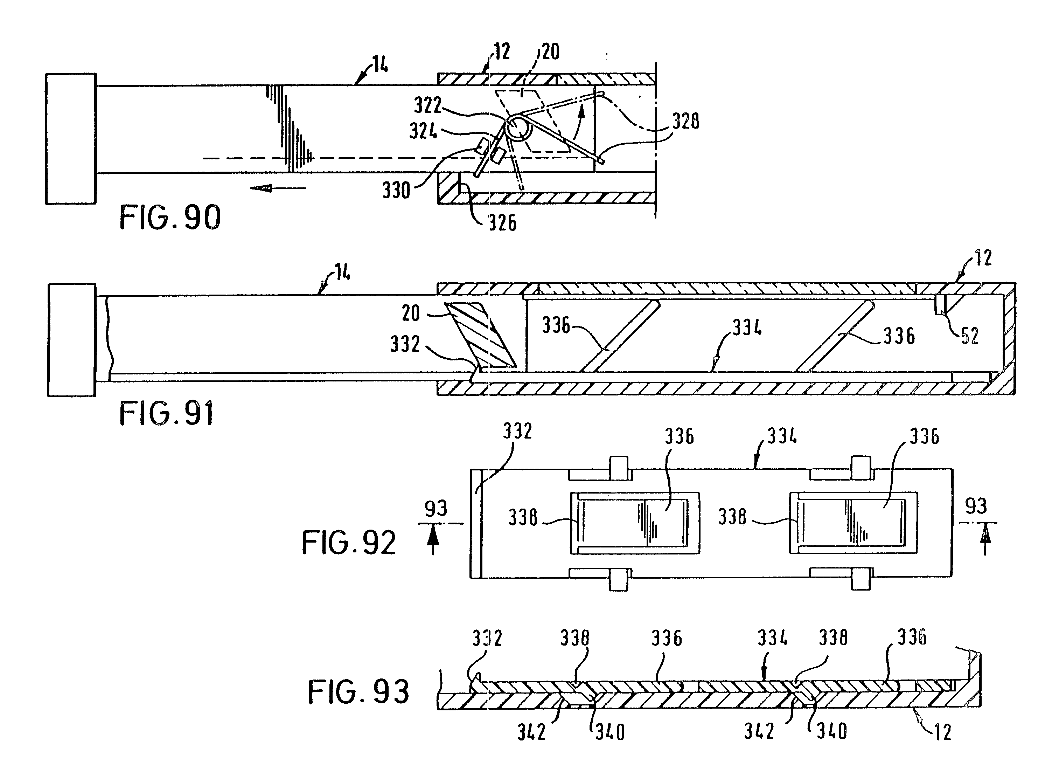

Fig. 90 zeigt in schematischer Seitenansicht einen Mechanismus, der anstelle der Hebefeder 79 verwendbar ist. Um einen Zapfen 322 ist eine Drahtfeder 324 mit ihrer Öse schwenkbar. Einer ihrer Arme ist abgewinkelt und greift von außen quer unter die betreffende Kante des Einzelblattes, der andere Arm ist durch Auflaufen auf einen Anschlag 326 umlegbar, nimmt dabei den abgewinkelten Arm 328 mit und bewirkt so das Heben der Blattkante. Eine Rasteinrichtung 330 ist angedeutet, um unkontrollierte Bewegungen des Mechanismus zu unterbinden; dieser soll ja nur in den beiden Endlagen (Ruheposition/Umkehrpunkt) umgesteuert werden.

Fig. 91 bis 93 zeigen eine Variante der Hebelanordnung als Leiteinrichtung. Der Separatorsteg 20 läuft kurz vor seiner Umkehrstellung auf einen Mitnehmerhaken 332 eines Hebelträgers 334 auf, an dem zwei Hebel 336 mittels angespritzter Gelenke 338 angelenkt sind. Durch die Verlagerung

des Hebelträgers laufen die an der Unterseite der Hebel angeformten Nocken 340 auf Anschläge 342 einer Steuerkurve auf, so daß die Hebel hochgestellt werden. Beim Rücklauf trifft der Separatorsteg zuerst auf den ihm näheren Hebel und drückt dabei den gesamten Hebelträger um ein kleines Stück zurück, bis der Hebel umgelegt ist; der andere Hebel hingegen bleibt noch stehen, weil die Anschläge 342 für die beiden Hebel einen größeren Abstand voneinander haben als die zugehörigen Nocken.

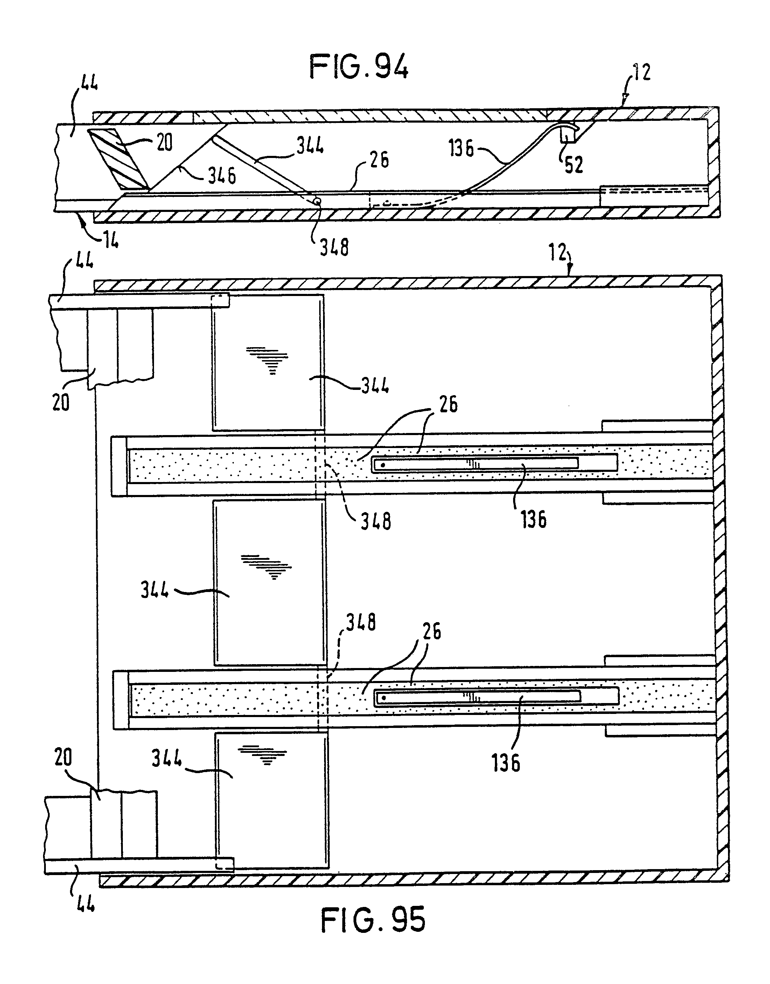

Die Ausführungsform nach Fig. 94 und 95 stellt eine Ausführungsform dar, bei der die Halteeinrichtung für das Einzelbild Haftbeläge 26 im ersten Rahmenteil umfaßt. Infolge statischer Aufladung kann, wie oben erwähnt, das Einzelblatt so fest an den Haftbelägen kleben, daß erhebliche Kräfte nötig sind, um es dort abzureißen. Es muß aber auf die den Haftbelägen abgewandte Seite des Rahmenteils geleitet werden. Daher sind Federn 136 mittig zwischen je zwei Haftbelägen vorgesehen. Die dem Separatorsteg 20 zugekehrte Kante des Einzelblattes wird von einem Hebel 344 geliftet, der mittels Steuerschrägen 346 an den Enden der Schieberholme 44 niedergedrückt wird, während er durch Federkraft (nicht dargestellt) gehoben wird. Der Hebel erstreckt sich, wie man in Fig. 95 sieht, über die gesamte Breite der Vorrichtung, und insbesondere greift er auch unmittelbar neben den Haftbelägen an dem Einzelblatt an. Die Welle des Hebels ist mit 348 angedeutet.

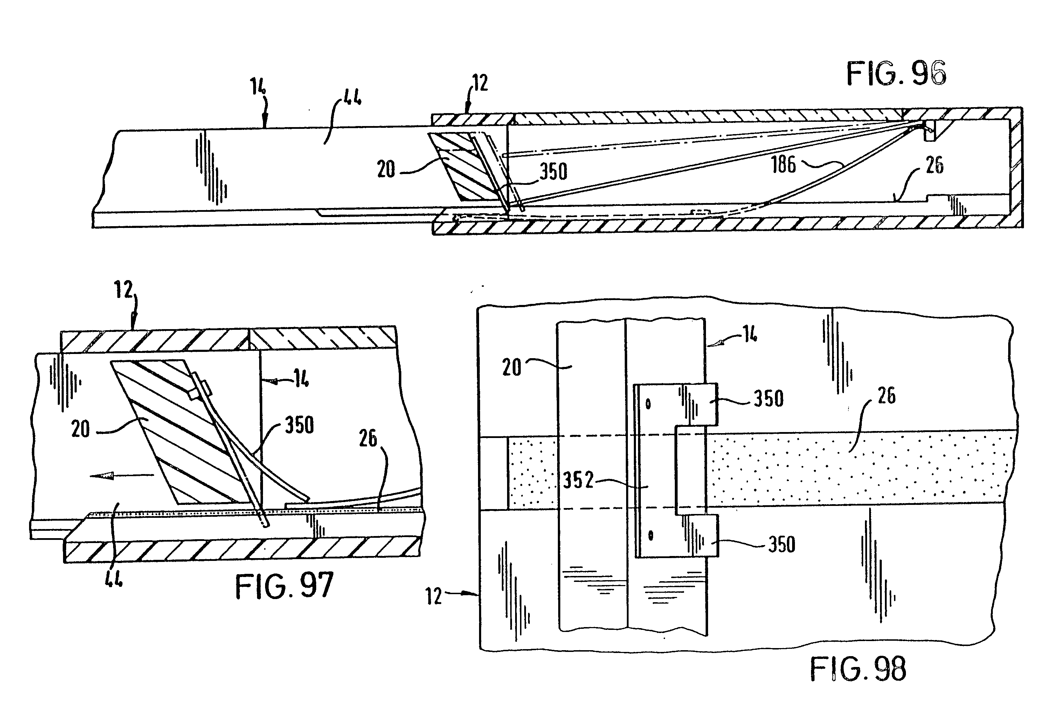

Fig. 96 bis 98 zeigen eine weitere Variante. An dem Separatorsteg 20 ist beidseits des Haftbelags 26 eine Lamelle 350 angeordnet, daß sie federnd in eine entsprechende Ausnehmung neben dem Haftbelag greift. Die beiden Lamellen sind durch eine Brücke 352 miteinander verbunden. Beim Durchlauf des Einzelblattes wird jede Lamelle federnd angehoben und schnappt nach Passieren der hinteren Blattkante wieder in die Ausnehmung zurück, so daß beim Rückhub die betreffende Blattkante vom Haftbelag abgerissen wird und die Kante längs des Separatorsteges hochsteigen muß, weil der Rückhub durch den anderen Durchlaß nun durch die Lamelle sicher versperrt ist.

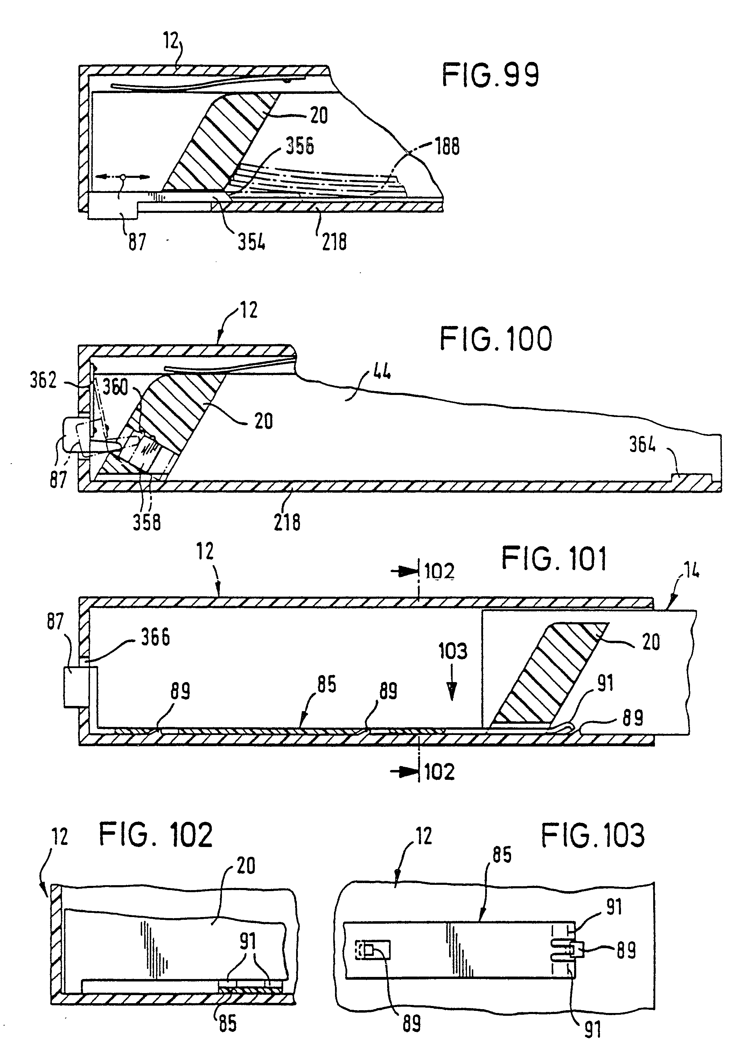

In Fig. 1 bis 10 und 13 bis 34 wurden zwei unterschiedliche Konzepte dargestellt, um den Wechselmechanismus "auszuschalten" und den Stapel vollständig mittels des Schiebers 14 aus dem Gehäuse 12 herauszutransportieren. Die ebenfalls stark vereinfachten Figuren 99 bis 105 stellen andere Konzepte für diese sogenannte Gesamtentnahme dar.

Fig. 99 zeigt im Teillängsschnitt eine Ausführungsform, bei der die Trenneinrichtung wahlweise durch manuellen Eingriff gesperrt werden kann. Es sei angenommen, daß eine Trenneinrichtung nach Fig. 35, 36 vorliegt, doch ist hier vom Schieber nur der Separatorsteg 20 gezeichnet. Die Stufe 354 ist nicht stationär, wie in Fig. 35 und 36, sondern in Schiebebewegungsrichtung verschieblich, wobei die Verschiebung von Hand mittels einer durch den Gehäuseboden 218 ragende Taste erfolgen kann. In der mit ausgezogenen Linien dargestellten Position entspricht dies der Fig. 35 (Normalbetrieb). Wird jedoch die Taste mit der Stufe nach rechts verlagert, so greift das keilartig ausgebildete Ende 356 unter die ihm zugekehrt liegende Kante des im Stapel untersten Blattes 188 und hebt diese auf die Stufe 354, so daß der Durchlaßspalt unter dem Separatorsteg "geschlossen" ist.

Die Stapelentnahmefunktion ist auch bei der Ausführungsform nach Fig. 100 (Teillängsschnitt) manuell steuerbar. Es sei angenommen, daß als Ausgangskonstruktion die nach Fig. 65 und 66 vorgesehen ist.

Auch bei der Fig. 101 (Teillängsschnitt), Fig. 102 (Teilquerschnitt) und Fig. 103 (Teildraufsicht) ist eine manuelle Umschaltbarkeit zwischen "Wechseln" und "Stapelentnahme" vorgesehen. Im Gehäuse 12 ist ein einstückiges Bauteil 85 in Längsrichtung verlagerbar durch Druck auf die Taste 87, wobei die mit der Taste verbundene Schiene auf Rampen 89 aufläuft und dabei das gesamte Bauteil 85 hebt; hierfür ist im Gehäuse ein Freiraum 366 für die Taste vorgesehen. Durch Heben der Schiene legt sich diese von unten an die den Durchlaßspalt begrenzende Kante des Separatorsteges 20 an. Von diesem Ende der Schiene stehen noch Nasen 91 nach oben, die – wenn der Separatorsteg unter Mitnahme des Gesamtstapels die Nasen überläuft – nach unten ausfedern können. Wird der Separator wieder zurückgeschoben, trifft er auf die Nasen und verlagert damit das gesamte Bauteil 85 in seine Ausgangsstellung, womit auch die Bahn für den Separator wieder freigegeben ist, der Spalt für die Abtrennung des Blattes wieder offen ist und somit der Wechsler wieder in der "Wechselfunktions"-Stellung ist.

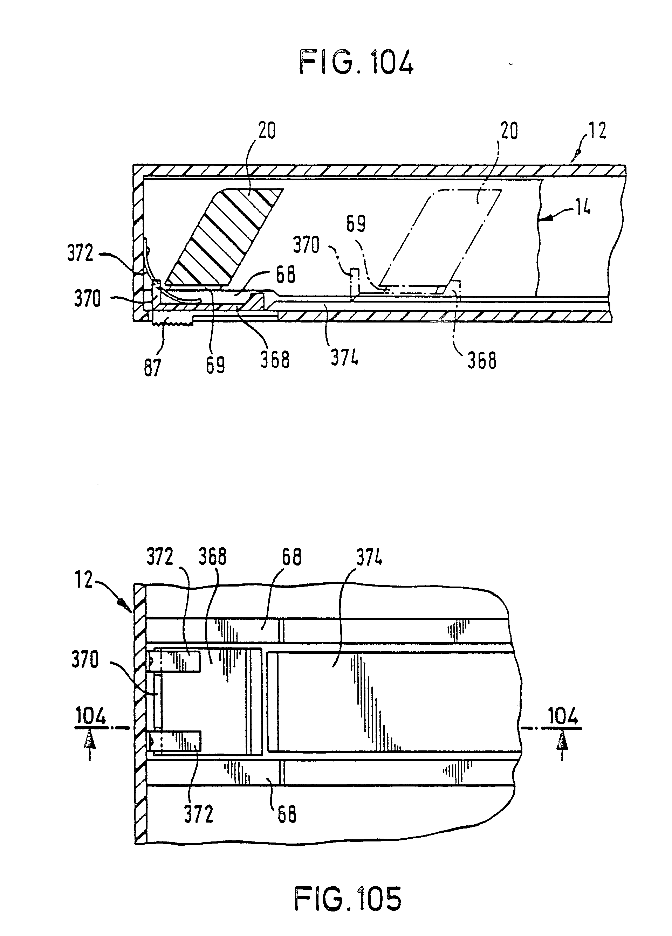

Fig. 104 und 105 zeigen im Teillängsschnitt bzw. in Teildraufsicht eine weitere Ausführungsform eines für die Stapelentnahme umschaltbaren Trennsystems. Es sei angenommen, daß im Prinzip die Bauart nach Fig. 63, 64 vorliegt. – Die in Fig. 61 mit 68 bezeichnete Stufe, die ja auch in Fig. 63 vorhanden ist, ist sehr schmal und dafür doppelt ausgeführt. Das den Durchtrittsspalt begrenzende Teil 69, das federnd im Separatorsteg 20 angeordnet ist, hat eine Aussparung gegenüber der Lücke zwischen den beiden Stufen 68. – An den Gehäuseboden 218 ist eine eindrückbare, zurückfedernde Taste 87 angeformt, die einen Blockierschuh 368 anhebt, der mit einem frontseitigen Fortsatz den Durchtrittsspalt sperrt, indem er sich vor die Unterkante des Separatorsteges legt, und mit einem rückseitigen Fortsatz 370 hinter den Separatorsteg greift. Beidseits dieses letztgenannten Fortsatzes drücken Blattfederchen 372 den Blockierschuh in Richtung Gehäuseboden. – Wird auf die Taste 87 gedrückt und der Blockierschuh in Mitnahmeverbindung mit dem Separatorsteg gebracht, wobei die Trennfunktion blockiert ist, und nun am Schieber gezogen, so wird der Blockierschuh einfach mitgenommen. Beim Wiedereinschub drücken die Federchen 372 den Schuh dann wieder in die Freigabeposition, die muldenförmig eingetieft hinter der Auflauframpe 374 vorgesehen ist.

Patentansprüche

1. Vorrichtung zum zyklischen Umschichten eines Stapels rechteckiger Blätter, insbesondere eines Stapels von Fotoabzügen, mit einem ersten und einem zweiten Rahmenteil, die relativ zueinander und parallel zur Stapelhauptebene bewegbar sind, und mit Mitteln, die bei einer Auseinanderbewegung der Rahmenteile ein Einzelblatt an einem Stapelende abnehmen und beim Zusammenführen der Rahmenteile am andern Stapelende zufügen, welche Mittel umfassen:

- eine Trenneinrichtung zum Abtrennen des Einzelblattes vom Stapel,
- eine Zufuhreinrichtung zum Zuführen von Blättern zur Trenneinrichtung,
- eine erste Halteeinrichtung zum Halten des abgetrennten Einzelblattes im ersten Rahmenteil,
- eine zweite Halteeinrichtung zum Halten des Reststapels im zweiten Rahmenteil, und
- eine Leiteinrichtung zum Führen des abgetrennten Einzelblattes zwecks Rückführung auf die andere Seite des Reststapels,

wobei die Zufuhreinrichtung (22) das Einzelblatt relativ zum Reststapel soweit verlagert, daß seine beiden Seiten zugänglich sind, *dadurch gekennzeichnet*, daß die erste Halteeinrichtung umfaßt:
(1) eine am zweiten Rahmenteil (14) angeordnete, auf dem Einzelblatt (88) mit einer Umfangsgeschwindigkeit gleich der Relativgeschwindigkeit der Rahmenteile abrollende Rollenanordnung (28, 300) und
(2) ein Abstützelement auf der der Rollenanordnung abgekehrten Seite des Einzelblatts, welches Abstützelement

- entweder eine am zweiten Rahmenteil angeordnete Gegenrollenanordnung (306)
- oder eine am ersten Rahmenteil vorgesehene Abrollschienenanordnung (134, 26) ist, und

daß die Rollenanordnung und das Abstützelement durch eine Andruckanordnung (71) das Einzelblatt klemmend halten.

2. Vorrichtung nach Anspruch 1, dadurch gekennzeichnet, daß mindestens eine Rolle (28) im Bereich der Trenneinrichtung (68, 69) vorgesehen ist.

3. Vorrichtung nach Anspruch 1 oder 2, dadurch gekennzeichnet, daß mindestens eine Schiene (134) mit einer reibungserhöhenden Beschichtung (26) versehen ist und mindestens eine Rolle (28) frei drehbar gelagert durch den Kontakt mit dem Einzelblatt antreibbar ist.

4. Vorrichtung nach Anspruch 1 oder 2, dadurch gekennzeichnet, daß mindestens eine Rolle (300) mit einer reibungserhöhenden Beschichtung versehen ist und durch die Relativbewegung zwischen den Rahmenteilen (12, 14) zum Umlauf angetrieben ist.

5. Vorrichtung nach einem der Ansprüche 1 bis 4, dadurch gekennzeichnet, daß die Andruckkraft auf dem gesamten Wechselhub von einer Federanordnung (71) aufgebracht ist.

6. Vorrichtung nach einem der Ansprüche 1 bis 5, dadurch gekennzeichnet, daß die Rollenanordnung an der zweiten Halteeinrichtung (20) angeordnet ist.

7. Vorrichtung nach Anspruch 6, dadurch gekennzeichnet, daß die zweite Halteeinrichtung (20) einen Teil der Trenneinrichtung bildet und eine Trennkante aufweist, und daß die Rollenanordnung um weniger als die Dicke eines Blattes über die Trennkante hinausragt.

8. Vorrichtung nach einem der vorangehenden Ansprüche, dadurch gekennzeichnet, daß das erste Rahmenteil ein Gehäuse (12) ist und das zweite Rahmenteil ein aus dem Gehäuse herausziehbarer Schieber (14) ist.

9. Vorrichtung nach Anspruch 8, dadurch gekennzeichnet, daß das Gehäuse (12) ein Sichtfenster (35) aufweist, durch das das oberste Blatt des Stapels exponiert ist, und daß das Einzelblatt das dem Sichtfenster abgekehrt liegende Blatt des Stapels ist.

10. Vorrichtung nach Anspruch 9, dadurch gekennzeichnet, daß die Abrollschienenanordnung (134, 26) auf einem dem Sichtfenster (35) gegenüberliegenden Gehäuseboden abgestützt ist.

11. Vorrichtung nach einem der Ansprüche 1 bis 10, dadurch gekennzeichnet, daß die Trenneinrichtung einen Separator (20) umfaßt, der einen Durchlaßspalt begrenzt, und daß mindestens eine Rolle in einem in Richtung des Stapels beweglich relativ zum Separator angeordneten Bauteil (69) gelagert ist.

12. Vorrichtung nach Anspruch 11, dadurch gekennzeichnet, daß das Bauteil (69) als unter Federvorspannung (71) stehender Schuh (69) den Durchlaßspalt begrenzt und daß dieselbe Federvorspannung auch die Andruckkraft liefert.

13. Vorrichtung nach Anspruch 12, dadurch gekennzeichnet, daß der Schuh (69) für die Anpassung an Verformungen kippbar gelagert ist.

14. Vorrichtung nach einem der Ansprüche 1 bis 13, gekennzeichnet durch eine Mehrzahl paralleler Abrollschienen (134) mit zugeordneten Rollen (28).

15. Vorrichtung nach einem der Ansprüche 1 bis

23

14, dadurch gekennzeichnet, daß die Andruckkraft durch eine auf die Schiene wirkende Vorspannfederanordnung aufgebracht ist.

16. Vorrichtung nach Anspruch 1, dadurch gekennzeichnet, daß mindestens eine der Halteeinrichtungen in der Symmetrieebene des Blattstapels angeordnet ist.

17. Vorrichtung nach Anspruch 4, dadurch gekennzeichnet, daß die Gegenrollenanordnung (306) ebenfalls mit einer reibungserhöhenden Beschichtung versehen ist und von der Rollenanordnung zu gleicher Umfangsgeschwindigkeit angetrieben ist.

18. Vorrichtung nach einem der vorangehenden Ansprüche, dadurch gekennzeichnet, daß die Schienenanordnung (134) getrennt gefertigte, in das erste Rahmenteil (12) eingefügte Schienen umfaßt.

19. Vorrichtung nach Anspruch 18, dadurch gekennzeichnet, daß die Schienen (134) vor dem Einsetzen mit einer reibungserhöhenden Beschichtung (26) versehen worden sind.

20. Vorrichtung nach Anspruch 18 oder 19, dadurch gekennzeichnet, daß die Schienen (134) symmetrisch bezüglich einer Ebene ausgebildet sind, die sich senkrecht zur Bewegungsrichtung der Rahmenteile erstreckt.

21. Vorrichtung nach einem der Ansprüche 18 bis 20, dadurch gekennzeichnet, daß ein Element (68) der Trenneinrichtung an die Schienen (134) angeformt ist.

22. Vorrichtung nach den Ansprüchen 20 und 21, dadurch gekennzeichnet, daß das erste Rahmenteil (12) Mittel (626) aufweist, die das Aufstoßen des mit dem zweiten Rahmenteil (14) aus dem ersten (12) herausbewegten Reststapels auf die Schienen (134) beim Rückhub verhindern.

23. Vorrichtung nach Anspruch 3, gekennzeichnet durch Distanzierungsmittel (44) zum Distanzieren des Reststapels von der Beschichtung (26) beim Zusammenschieben der Rahmenteile.

24. Vorrichtung nach Anspruch 23, dadurch gekennzeichnet, daß die Distanzierungsmittel (44) am zweiten Rahmenteil (14) vorgesehen sind.

25. Vorrichtung nach Anspruch 23 oder 24, dadurch gekennzeichnet, daß die Rollenanordnung das Einzelblatt unter elastischer Deformation desselben durch die Distanzierungsmittel gegen das Abstützelement drückt.

26. Vorrichtung nach Anspruch 1, dadurch gekennzeichnet, daß sich die Schienenanordnung im wesentlichen über die Länge des Hubes der Rahmenteilbewegung erstreckt.

24

27. Vorrichtung nach Anspruch 1, dadurch gekennzeichnet, daß die Rahmenteile in Klemmrichtung gegeneinander federvorgespannt sind.

28. Vorrichtung nach Anspruch 1, dadurch gekennzeichnet, daß die Rollenanordnung oder das Abstützelement in dem zugeordneten Rahmenteil elastisch abgestützt sind.

29. Vorrichtung nach Anspruch 1, dadurch gekennzeichnet, daß die Trenneinrichtung einen Durchlaßspalt für das Einzelblatt begrenzende Mittel (20, 68, 69) umfaßt und die Rollenanordnung und das Abstützelement erst dann von der Andruckanordnung gegeneinander gedrückt werden, wenn das Einzelblatt mit seiner führenden Kante den Durchlaßspalt passiert hat.

30. Vorrichtung nach Anspruch 1, gekennzeichnet durch Führungsmittel zum stoßfreien Aufsetzen der Rollenanordnung auf das Abstützelement.

31. Vorrichtung nach Anspruch 1, dadurch gekennzeichnet, daß die erste Halteeinrichtung zusätzlich das Einzelblatt haltende Mittel (32) umfaßt, die spätestens dann aktiv sind, wenn beim Auseinanderziehen der Rahmenteile (12, 14) die Rollenanordnung das Einzelblatt vollständig überlaufen hat.

32. Vorrichtung nach einem der Ansprüche 23 bis 25, dadurch gekennzeichnet, daß die Distanzierungsmittel sich in Richtung der Rahmenteilbewegung erstrecken.

33. Vorrichtung nach einem der Ansprüche 23 bis 25, dadurch gekennzeichnet, daß die Distanzierungsmittel bezüglich der Rahmenteilbewegungsrichtung seitlich neben dem Abstützelement angeordnet sind.

34. Vorrichtung nach Anspruch 31, dadurch gekennzeichnet, daß die zusätzlichen Mittel das Einzelblatt mindestens solange halten, bis es von der zweiten Halteeinrichtung (20) passiert worden ist.

35. Vorrichtung nach einem der vorangehenden Ansprüche, dadurch gekennzeichnet, daß die Rollenanordnung (28, 300) an das Abstützelement (134, 26, 306) symmetrisch bezüglich einer sich in Rahmenteilbewegungsrichtung erstreckenden Symmetrieebene ausgebildet und angeordnet sind.

36. Vorrichtung nach Anspruch 35, gekennzeichnet durch paarweise Ausbildung der Rollenanordnung und des Abstützelements.

37. Vorrichtung nach Anspruch 1, dadurch gekennzeichnet, daß die Trenneinrichtung eine an der zweiten Halteeinrichtung (20) vorgesehene Trennkante umfaßt, die bei zusammengeschobenen Rahmenteilen (12, 14) von einer Blattabstützung durch eine Sperrstufe (69) distanziert wird.

38. Vorrichtung nach Anspruch 37, dadurch gekennzeichnet, daß die Blattabstützung ein Teil der Schienenanordrung (134, 26) ist.

39. Vorrichtung nach Anspruch 37 oder 38, dadurch gekennzeichnet, daß die zweite Halteeinrichtung eine von der Trennkante ausgehende Schrägfläche aufweist, längs der an ihr anliegende Querkanten der Blätter des Stapels beim Auseinanderziehen der Rahmenteile vor die Sperrstufe förderbar sind.

40. Vorrichtung nach Anspruch 39, dadurch gekennzeichnet, daß die Sperrstufe (69) eine Höhe hat, die größer ist als eine Blattdicke und kleiner als zwei Blattdicken, so daß beim Auseinanderziehen der Rahmenteile die Querkante des Einzelblatts hinter der Sperrstufe liegend von der zweiten Halteeinrichtung passiert wird.

41. Vorrichtung nach Anspruch 40, dadurch gekennzeichnet, daß die Rollenanordnung (28) der Trennkante nachlaufend angeordnet ist und sich, nachdem die Trennkante die Querkante des Einzelblatts passiert hat, auf dessen vorher dem Stapel zugekehrte Fläche setzt.

42. Vorrichtung nach Anspruch 41, dadurch gekennzeichnet, daß bei auf dem Einzelblatt aufsitzender Rollenanordnung der Abstand zwischen dem Einzelblatt und der Trennkante geringer als eine Blattdicke ist.

43. Vorrichtung nach einem der Ansprüche 39 bis 42, dadurch gekennzeichnet, daß die Zufuhreinrichtung an der der Sperrstufe (69) abgewandten Querkante des Einzelblattes bremsend angreift.

**Claims**

1. Device for the cyclic rearrangement of a pile of rectangular sheets, in particular a pile of photographic prints, with a first and a second frame part which are movable relative to one another and parallel to the main plane of the pile, and with means which, on movement of the frame parts away from one another, remove an individual sheet at one end of the pile and, on movement of the frame parts towards one another, add it to the other end of the pile, which means comprise:

— a separating means for separating the individual sheet from the pile,
— a feeding means for feeding sheets to the separating means,
— a first retaining means for retaining the separated individual sheet in the first frame part, and
— a second retaining means for retaining the remainder of the pile in the second frame part, and

— a guide means for guiding the separated individual sheet for the purpose of returning it to the other end of the remainder of the pile,

wherein the feeding means (22) displaces the individual sheet relative to the remainder of the pile to such an extent that both of its sides are accessible, characterized in that the first retaining means comprises:
   (1) a roller arrangement (28, 300) arranged on the second frame part (14) and rolling on the individual sheet (88) at a circumferential speed equal to the relative speed of the frame parts and
   (2) a support member on the side of the individual sheet remote from the roller arrangement, which support member is

— either a complementary roller arrangement (306) arranged on the second frame part
— or a roll-along rail arrangement (134, 26) provided on the first frame part, and the roller arrangement and the support member hold the individual sheet gripped by means of a pressure-applying assembly (71).

2. A device according to claim 1, characterized in that at least one roller (28) is provided in the region of the separating means (68, 69).

3. A device according to claim 1 or 2, characterized in that at least one rail (134) is provided with a friction-increasing coating (26) and at least one roller (28), mounted so as to rotate freely, is arranged to be driven by contact with the individual sheet.

4. A device according to claim 1 or 2, characterized in that at least one roller (300) is provided with a friction-increasing coating and is driven in rotation by the relative movement between the frame parts (12, 14).

5. A device according to one of claims 1 to 4, characterized in that the pressing force is applied for the duration of the entire changeover travel by a spring assembly (71).

6. A device according to one of claims 1 to 5, characterized in that the roller arrangement is arranged on the second retaining means (20).

7. A device according to claim 6, characterized in that the second retaining means (20) forms a part of the separating means and has a separating edge, and the roller arrangement protrudes beyond the separating edge by less than the thickness of one sheet.

8. A device according to one of the preceding claims, characterized in that the first frame part is a housing (12) and the second frame part is a slider member (14) arranged to be withdrawn from the housing.

9. A device according to claim 8, characterized in that the housing (12) has a viewing window (35) through which the uppermost sheet of the pile is exposed, and the individual sheet is the sheet of the pile lying remote from the viewing window.

10. A device according to claim 9, characterized in that the roll-along rail arrangement (134, 26) is supported on a housing base lying opposite the viewing window (35).

11. A device according to one of claims 1 to 10, characterized in that the separating means comprises a separator (20) that defines a through-slot, and at least one roller is mounted in a component (69) arranged to move towards the pile relative to the separator.

12. A device according to claim 11, characterized in that the component (69) defines the through-slot by having the form of a shoe (69) and being under spring bias (71), and this same spring bias also supplies the pressing force.

13. A device according to claim 12, characterized in that the shoe (69) is mounted so as to tilt in order to accommodate deformations.

14. A device according to one of claims 1 to 13, characterized by a plurality of parallel roll-along rails (134) with associated rollers (28).

15. A device according to one of claims 1 to 14, characterized in that the pressing force is applied by a biassing spring arrangement acting on the rail.

16. A device according to claim 1, characterized in that at least one of the retaining means is arranged in the plane of symmetry of the pile of sheets.

17. A device according to claim 4, characterized in that the complementary roller arrangement (306) is likewise provided with a friction-increasing coating, and is driven by the roller arrangement at the same circumferential speed.

18. A device according to one of the preceding claims, characterized in that the rail arrangement (134) comprises separately manufactured rails inserted in the first frame part (12).

19. A device according to claim 18, characterized in that the rails (134) have been provided with a friction-increasing coating (26) prior to installation.

20. A device according to claim 18 or 19, characterized in that the rails (134) are of symmetrical construction with respect to a plane that extends perpendicularly to the direction of movement of the frame parts.

21. A device according to one of claims 18 to 20, characterized in that an element (68) of the separating means is integrally moulded with the rails (134).

22. A device according to one of claims 20 and 21, characterized in that the first frame part (12) has means (626) that prevent the remainder of the pile, moved by the second frame part (14) out of the first (12), from striking against the rails (134) during the return travel.

23. A device according to claim 3, characterized by spacer means (44) for spacing the remainder of the pile from the coating (26) as the frame parts are pushed together.

24. A device according to claim 23, characterized in that the spacer means (44) are provided on the second frame part (14).

25. A device according to claims 23 or 24, characterized in that the roller arrangement presses the individual sheet, with the latter undergoing resilient deformation by the spacer means, against the support member.

26. A device according to claims 1, characterized in that the rail arrangement extends substantially for the length of travel of the movement of the frame parts.

27. A device according to claim 1, characterized in that the frame parts are spring biassed towards one another in the gripping direction.

28. A device according to claim 1, characterized in that the roller arrangement or the support member are resiliently supported in the associated frame part.

29. A device according to claim 1, characterized in that the separating means comprises means (20, 68, 69) defining a through-slot for the individual sheet and the roller arrangement and the support member are not pressed against one another by the pressure assembly until the individual sheet has passed the through-slot with its leading edge.

30. A device according to claim 1, characterized by guide means for jolt-free positioning of the roller arrangement on the support member.

31. A device according to claim 1, characterized in that the first retaining means additionally comprises means (32) holding the individual sheet, which means are activated at the latest when, as the frame parts (12, 14) are moved away from one another, the roller arrangement has passed completely over the individual sheet.

32. A device according to one of claims 23 to 25, characterized in that the spacer means extend in the direction of movement of the frame parts.

33. A device according to one of claims 23 to 25, characterized in that the spacer means are arranged relative to the direction of movement of the frame parts laterally next to the support member.

34. A device according to claim 31, characterized in that the additional means hold the individual sheet at least until it has been passed over by the second retaining means (20).

35. A device according to one of the preceding claims, characterized in that the roller arrangement (28, 300) is formed and arranged on the support member (134, 26, 306) symmetrically with respect to a plane of symmetry extending in the direction of movement of the frame parts.

36. A device according to claim 35, characterized by paired construction of the roller arrangement and the support member.

37. A device according to claim 1, characterized in that the separating means comprises a separating edge provided on the second retaining means (20), which separating edge is spaced from a sheet supporting means by a blocking step (69) when the frame parts (12, 14) have been pushed together.

38. A device according to claim 37, characterized in that the sheet supporting means is a part of the rail arrangement (134, 26).

39. A device according to claim 37 or 38, characterized in that, starting from the separating edge, the second retaining means has an inclined face along which transverse edges of the sheets of the pile lying adjacent to it can be conveyed in front of the blocking step as the frame parts are moved apart.

40. A device according to claim 39, characterized in that the blocking step (69) has a height that is larger than the thickness of one sheet and less than the thickness of two sheets, so that as the frame parts are pulled apart the transverse edge of the individual sheet lying behind the blocking step is passed over by the second retaining means.

41. A device according to claim 40, characterized in that the roller arrangement (28) is arranged to follow the separating edge and, once the separating edge has passed the transverse edge of the individual sheet, positions itself on the face of the individual sheet previously facing the pile.

42. A device according to claim 41, characterized in that, when the roller arrangement is positioned on the individual sheet, the distance between the individual sheet and the separating edge is less than the thickness of one sheet.

43. A device according to one of claims 39 to 42, characterized in that the feeding means engages, with a braking action, the transverse edge of the individual sheet remote from the blocking step (69).

## Revendications

1. Dispositif de reclassement cyclique d'une pile de feuilles rectangulaires, notamment d'une pile de clichés photographiques, comportant des premier et second éléments en forme de cadres, qui peuvent être déplacés l'un par rapport à l'autre parallèlement au plan principal de la pile, et des moyens qui, lors du mouvement d'extraction des éléments en forme de cadres l'un hors de l'autre, prélèvent une feuille individuelle sur une extrémité de la pile et, lors de la réinsertion des éléments en forme de cadres l'un dans l'autre, l'ajoutent à l'autre extrémité de la pile, ces moyens comprenant :

– un dispositif de séparation servant à séparer la feuille individuelle de la pile,
– un dispositif d'amenée servant à amener des feuilles au dispositif de séparation,
– un premier dispositif de retenue servant à retenir la feuille individuelle séparée dans le premier élément en forme de cadre,
– un second dispositif de retenue servant à retenir la pile restante dans le second élément en forme de cadre, et
– un dispositif de guidage servant à amener la feuille individuelle séparée pour son renvoi sur l'autre côté de la pile restante, le dispositif d'amenée (22) décalant la feuille individuelle par rapport à la pile restante de sorte que ses deux côtés soient accessibles, caractérisé en ce que le premier dispositif de retenue comprend:

(1) un dispositif à galets (28, 300) qui est installé sur le second élément en forme de cadre (14) et roule sur la feuille individuelle (88) avec une vitesse circonférentielle égale à la vitesse relative des éléments en forme de cadres, et

(2) un élément d'appui situé du côté de la feuille individuelle, tourné à l'opposé du dispositif à galets, cet élément d'appui étant

– soit un dispositif à galets antagonistes (306) disposé dans le second élément en forme de cadre,
– soit un dispositif à rails de roulement (134, 26), prévu sur le premier élément en forme de cadre, et
– que le dispositif à galets et l'élément d'appui retiennent par serrage la feuille individuelle, au moyen d'un dispositif de serrage (71).

2. Dispositif selon la revendication 1, caractérisé en ce qu'au moins un galet (28) est prévu au voisinage du dispositif de séparation (68, 69).

3. Dispositif selon la revendication 1 ou 2, caractérisé en ce qu'au moins un rail (134) comporte un revêtement (26), qui accroît le frottement, et

qu'au moins un galet (28), monté de manière à pouvoir tourner librement, peut être entraîné par le contact avec la feuille individuelle.

4. Dispositif selon la revendication 1 ou 2, caractérisé en ce qu'au moins un galet (300) comporte un revêtement augmentant le frottement et est entraîné en rotation sous l'effet du déplacement relatif entre les éléments en forme de cadres (12, 14).

5. Dispositif selon l'une des revendications 1 à 4, caractérisé en ce que la force de pression est appliquée, sur l'ensemble de la course de changement, par un dispositif formé d'un ressort (71).

6. Dispositif selon l'une des revendications 1 à 5, caractérisé en ce que le dispositif à galets est disposé sur le second dispositif de retenue (20).

7. Dispositif selon la revendication 6, caractérisé en ce que le second dispositif de retenue (20) constitue une partie du dispositif de séparation et possède une arête de séparation, et en ce que le dispositif à galets fait saillie au-delà du bord de séparation, sur une distance inférieure à l'épaisseur d'une feuille.

8. Dispositif selon l'une des revendications précédentes, caractérisé en ce que le premier élément en forme de cadre est un boîtier (12) et que le second élément en forme de cadre est un tiroir (14) pouvant être ressorti hors du boîtier.

9. Dispositif selon la revendication 8, caractérisé en ce que le boîtier (12) comporte un voyant (35), à travers lequel la feuille supérieure de la pile est exposée, et en ce que la feuille individuelle est la feuille de la pile, située sur le côté opposé par rapport au voyant.

10. Dispositif selon la revendication 9, caractérisé en ce que le dispositif à rails de roulement (134, 26) prend appui sur le fond du boîtier, situé à l'opposé du voyant (35).

11. Dispositif selon l'une des revendications 1 à 10, caractérisé en ce que le dispositif de séparation comporte un séparateur (20) qui limite une fente de passage, et en ce qu'au moins un galet est monté dans un composant (69) monté de manière à être déplaçable par rapport au séparateur en direction de la pile.

12. Dispositif selon la revendication 11, caractérisé en ce que le composant (69), agencé à la manière d'un sabot (69) placé sous la précontrainte d'un ressort (71), limite la fente de passage et en ce que cette précontrainte produite par un ressort produit également la force de serrage.

13. Dispositif selon la revendication 12, caractérisé en ce que le sabot (69) est monté basculant de manière à permettre une adaptation à des déformations.

14. Dispositif selon l'une des revendications 1 à 13, caractérisé par une multiplicité de rails de roulement parallèles (134), comportant des galets associés (28).

15. Dispositif selon l'une des revendications 1 à 14, caractérisé en ce que la force de serrage est appliquée par un dispositif à ressorts de précontrainte, agissant sur les rails.

16. Dispositif selon la revendication 1, caractérisé en ce qu'au moins l'un des dispositifs de retenue est disposé dans le plan de symétrie de la pile de feuilles.

17. Dispositif selon la revendication 4, caractérisé en ce que le dispositif à galets antagonistes (306) est également pourvu d'un revêtement augmentant le frottement et est entraîné par le dispositif à galets à la même vitesse circonférentielle.

18. Dispositif selon l'une des revendications précédentes, caractérisé en ce que le dispositif à rails (134) comporte des rails fabriqués séparément et insérés dans le premier élément en forme de cadre (12).

19. Dispositif selon la revendication 18, caractérisé en ce que les rails (134) ont été pourvus, avant leur montage, d'un revêtement (26) augmentant le frottement.

20. Dispositif selon la revendication 18 ou 19, caractérisé en ce que les rails (134) sont disposés symétriquement par rapport à un plan, qui s'étend perpendiculairement à la direction de déplacement des éléments en forme de cadres.

21. Dispositif selon l'une des revendications 18 à 20, caractérisé en ce qu'un élément (68) du dispositif de séparation est formé par façonnage sur les rails (134).

22. Dispositif selon les revendications 20 et 21, caractérisé en ce que le premier élément en forme de cadre (12) comporte des moyens (626), qui empêchent le refoulement de la pile restante, extraite du premier élément en forme de cadre (12) par le second élément en forme de cadre (14), sur les rails (134) lors de la course de retour.

23. Dispositif selon la revendication 3, caractérisé par des moyens d'écartement (44) servant à maintenir la pile restante écartée du revêtement (26) lors de l'introduction des éléments en forme de cadres l'un dans l'autre.

24. Dispositif selon la revendication 23, caractérisé en ce que les moyens d'écartement (44) sont prévus sur le second élément en forme de cadre (14).

25. Dispositif selon la revendication 23 ou 24, caractérisé en ce que le dispositif à galets repousse la feuille individuelle, moyennant une déformation élastique de cette dernière, par l'intermédiaire des moyens d'écartement contre l'élément d'appui.

26. Dispositif selon la revendication 1, caractérisé en ce que le dispositif à rails s'étend essentiellement sur toute la longueur de la course de déplacement des éléments en forme de cadre.

27. Dispositif selon la revendication 1, caractérisé en ce que les éléments en forme de cadre sont précontraints élastiquement l'un contre l'autre dans la direction de serrage.

28. Dispositif selon la revendication 1, caractérisé en ce que le dispositif à galets ou l'élément d'appui sont supportés élastiquement dans l'élément en forme de cadre associé.

29. Dispositif selon la revendication 1, caractérisé en ce que le dispositif de séparation comporte des moyens (20, 68, 69) limitant une fente de passage pour la fente individuelle et que le dispositif à galets et l'élément d'appui sont repoussés l'un contre l'autre par le dispositif de serrage uniquement lorsque le bord avant de la feuille individuelle a franchi la fente de passage.

30. Dispositif selon la revendication 1, caractérisé par des moyens de guidage servant à appliquer sans choc le dispositif à galets sur l'élément d'appui.

31. Dispositif selon la revendication 1, caractérisé en ce que le premier dispositif de retenue comporte en outre des moyens (32), qui retiennent la feuille individuelle et sont actifs au plus tard lorsque, lors de l'extraction des éléments en forme de cadres (12, 14) l'un hors de l'autre, le dispositif à galets est passé complètement au-dessus de la feuille individuelle.

32. Dispositif selon l'une des revendications 23 à 25, caractérisé en ce que les moyens d'écartement s'étendent dans la direction de déplacement des éléments en forme de cadres.

33. Dispositif selon l'une des revendications 23 à 25, caractérisé en ce que les moyens d'écartement sont disposés latéralement, par rapport à la direction de déplacement des éléments en forme de cadres, à côté de l'élément d'appui.

34. Dispositif selon la revendication 31, caractérisé en ce que les moyens supplémentaires retiennent la feuille individuelle au moins jusqu'à ce que le second dispositif de retenue (20) l'ait dépassé.

35. Dispositif selon l'une des revendications précédentes, caractérisé en ce que le dispositif à galets (28, 300) est agencé et disposé sur l'élément d'appui (134, 26, 306) symétriquement par rapport à un plan de symétrie, qui s'étend dans la direction de déplacement des éléments en forme de cadres.

36. Dispositif selon la revendication 25, caractérisé par une forme de réalisation par couples des dispositifs à galets et de l'élément d'appui.

37. Dispositif selon la revendication 1, caractérisé en ce que le dispositif de séparation comporte une arête de séparation, qui est prévue sur le second dispositif de retenue (20) et qui, lorsque les deux éléments en forme de cadres (12, 14) sont rentrés l'un dans l'autre, est écartée de tout appui pour la feuille, par un élément saillant de blocage (69).

38. Dispositif selon la revendication 37, caractérisé en ce que l'appui pour la feuille fait partie du dispositif à rails (134, 26).

39. Dispositif selon la revendication 37 ou 38, caractérisé en ce que le second dispositif de retenue comporte une surface oblique, qui s'étend à partir de l'arête de séparation le long de laquelle des bords transversaux, qui s'appliquent contre elle, des feuilles de la pile peuvent être entraînés lors de l'extraction des éléments en forme de cadres l'un hors de l'autre, en avant de l'élément saillant de blocage.

40. Dispositif selon la revendication 39, caractérisé en ce que l'élément saillant de blocage (69) possède une hauteur supérieure à l'épaisseur d'une feuille et inférieure à l'épaisseur de deux feuilles, de sorte que, lors de l'extraction des éléments en forme de cadres l'un hors de l'autre, le bord transversal de la feuille individuelle, qui est situé en arrière de l'élément saillant de blocage, est franchi par le second dispositif de retenue.

41. Dispositif selon la revendication 40, caractérisé en ce que le dispositif à galets (28) est disposé de manière à être en arrière de l'arête de séparation et que, une fois que l'arête de séparation a franchi le bord transversal de la feuille individuelle, le dispositif à galets s'applique sur la surface de cette feuille tournée antérieurement vers la pile.

42. Dispositif selon la revendication 41, caractérisé en ce que, lorsque le dispositif à galets est en appui sur la feuille individuelle, la distance entre la feuille individuelle et l'arête de séparation est inférieure à l'épaisseur d'une feuille.

43. Dispositif selon l'une des revendications 39 à 42, caractérisé en ce que le dispositif d'amenée s'applique, en exerçant une action de freinage, sur le bord transversal de la feuille individuelle, tourné à l'opposé de l'élément saillant de blocage (69).

## FIG. 6

## FIG. 1

FIG. 2

FIG. 3

FIG. 4

FIG. 5

FIG. 7

FIG. 8

FIG. 9

FIG. 10

## FIG. 11

## FIG. 12

EP 0 201 551 B1

FIG.13

FIG.14

FIG.15

FIG.16

FIG.17

FIG.18

EP 0 201 551 B1

FIG.19

132   140   134   68

62

FIG.20

132   140

26   134

138   68

FIG.21

136   134

62

FIG.22

26

134   136   153

136   134   -62-

26   138   68

FIG. 23

FIG. 24

FIG. 25

EP 0 201 551 B1

FIG.26

FIG.27

FIG. 28

FIG. 29

FIG. 30

FIG. 31

FIG. 34

FIG.32

FIG.33

FIG. 35

FIG. 36

FIG. 37

EP 0 201 551 B1

FIG. 39

FIG. 38

FIG. 40

FIG. 41

FIG.42

FIG.43

FIG.44

FIG.45

FIG.46

FIG.47

FIG.48

FIG.49

FIG.50

FIG.51

FIG. 52

FIG. 53

FIG. 54

FIG. 55

FIG. 56

FIG. 57

FIG. 58

FIG. 59

FIG. 60

FIG. 61

FIG. 62

FIG. 63

FIG. 64

EP 0 201 551 B1

# FIG. 69

# FIG. 70

# FIG. 71

# FIG. 72

EP 0 201 551 B1

FIG.73

FIG.74

FIG.75

FIG.76

EP 0 201 551 B1

FIG. 77

FIG. 79

FIG. 78

FIG. 80

FIG. 81

# FIG. 82

FIG. 83

312 314 81 35

14

20

182 80 32 52 12

FIG. 85

35

52
316

20

12

FIG. 84

35 40

52

20

12

44

14

EP 0 201 551 B1

53

FIG.86

FIG.87

FIG.88

FIG.89

FIG.90

FIG.91

FIG.92

FIG.93

# FIG.94

# FIG.95

FIG. 96

20   350   186   26

14   44   12

12

20   350   14   26

44

FIG. 97

20   14

350

352   26

350

12

FIG. 98

EP 0 201 551 B1

FIG.99

FIG.100

FIG.101

FIG. 102

FIG. 103

# FIG. 104

# FIG. 105